# EUROPÄISCHE PATENTSCHRIFT

(11) **EP 1 993 728 B1**
(45) Veröffentlichungstag und Bekanntmachung des Hinweises auf die Patenterteilung: **06.06.2012**
(21) Anmeldenummer: 07703742.2
(22) Anmeldetag: 09.01.2007
(51) Int. Cl.: B01J 31/22, C07F 15/00, H01J 1/62

(54) **VERFAHREN ZUR HERSTELLUNG VON ÜBERGANGSMETALL-CARBENKOMPLEXEN**
PROCESS FOR PREPARING TRANSITION METAL-CARBENE COMPLEXES
PROCEDE DE FABRICATION DE COMPLEXES CARBENE-METAL DE TRANSITION

(30) Priorität: 31.01.2006 EP 06101109
(43) Veröffentlichungstag der Anmeldung: 26.11.2008
(60) Teilanmeldung: 11158560.0
(73) Patentinhaber: BASF SE, 67056 Ludwigshafen (DE)
(72) Erfinder: MOLT, Oliver, 69493 Hirschberg (DE); FUCHS, Evelyn, 68199 Mannheim (DE); EGEN, Martina, 69221 Dossenheim (DE); KAHLE, Klaus, 67069 Ludwigshafen (DE); LENNARTZ, Christian, 67105 Schifferstadt (DE)
(86) Internationale Anmeldenummer: PCT/EP2007/050193
(87) Internationale Veröffentlichungsnummer: WO 2007/088093

(56) Entgegenhaltungen:
- US-A1- 2005 258 742
- COLEMAN, KARL S. ET AL: "Silver(I) complex of a new imino-N-heterocyclic carbene and ligand transfer to palladium(II) and rhodium(I)" DALTON TRANSACTIONS ( 2003 ), (14), 2917-2922 CODEN: DTARAF; ISSN: 1477-9226, 2003, XP002309661
- NOELS ET AL: "Evaluation of ruthenium-based complexes for the controlled radical polymerization of vinyl monomers" CAN. J. CHEM., Bd. 79, 2001, Seiten 529-535, XP002425066 in der Anmeldung erwähnt

## Beschreibung

Die vorliegende Erfindung betrifft ein Verfahren zur Herstellung von cyclometallierten Übergangsmetall-Carbenkomplexen enthaltend mindestens einen Carbenliganden umfassend die Umsetzung des Ligandvorläufers mit einem basischen Hilfsreagenz und einem Metallkomplex enthaltend mindestens ein Metall M¹ (Weg B).

In organischen Licht-emittierenden Dioden (OLED) wird die Eigenschaft von Materialien ausgenutzt, Licht zu emittieren, wenn sie durch elektrischen Strom angeregt werden. OLEDs sind insbesondere interessant als Alternative zu Kathodenstrahlröhren und Flüssigkristalldisplays zur Herstellung von Flachbildschirmen. Aufgrund der sehr kompakten Bauweise und des intrinsisch niedrigeren Stromverbrauchs eignen sich Vorrichtungen, enthaltend OLEDs insbesondere für mobile Anwendungen, zum Beispiel für Anwendungen in Handys, Laptops usw.

Es wurden zahlreiche Materialien vorgeschlagen, die bei der Anregung durch elektrischen Strom Licht emittieren.

In WO2005/019373 wird die Verwendung von Übergangsmetalikomplexen enthaltend mindestens einen Carbenliganden in organischen Licht-emittierenden Dioden (OLEDs) offenbart. Diese werden durch Deprotonierung von den entsprechenden Ligandvorläufern und anschließende Umsetzung mit geeigneten, das gewünschte Metall enthaltenden, Metallkomplexen ohne Zugabe weiterer Hilfsreagenzien hergestellt, wobei die Ausbeuten der erhaltenen Übergangsmetallkomplexe zum Teil verbesserungswürdig sind.

Im Stand der Technik sind Verfahren bekannt, worin Übergangsmetallcarbenkomplexe in Anwesenheit von Silber enthaltenden Hilfsreagenzien hergestellt werden. Bekannte Verfahren betreffen insbesondere den Einsatz von Ag₂O zur Herstellung von Silber-Carbenkomplexen und anschließenden Carben-Transfer auf andere Metalle sowie den Einsatz von Sübersalzen wie AgBF₄, AgCO₂CF₃, AgPF₆, AgOTf zur Halogenidabstraktion bzw. zum Anionenaustausch in Metallcarbenkomplexen.

Mark E. Thompson et al., Inorganic Chemistry, 2005, 44, 7992-8003 betrifft IridiumKomplexe mit cyclometallierten N-heterocyclischen Carbenliganden (NHC). Die Herstellung von Iridium-Komplexen, die drei cyclometallierte Carbenliganden (C∧C:) tragen, erfolgt durch Umsetzung der entsprechenden Imidazolium- (pmiH⁺) oder Benzimidazoliumiodidsalze (pmbH⁺) mit Silber(I)oxid (Ag₂O) und Iridium(III)chlorid-Hydrat unter Rückfluss in 2-Ethoxyethanol in einem Schritt, wobei eine Mischung der gewünschten fac- und *mer*-Ir(C∧C:)₃-Komplexe in geringen Ausbeuten (gemäß der Beschreibung <10%) gemeinsam mit einem Produkt der folgenden Formel erhalten wird: [(C∧C:)₂IrCl]₂. Das Produkt der Formel [(C∧C:)₂IrCl]₂ kann wiederum mit den entsprechenden lmidazolium- oder Benzimidazoliumiodidsalzen und Ag₂O in 1,2-Dichlorethan zu fac- und *mer*-Ir(C∧C:)₃-Komplexen umgesetzt werden, um die Ausbeute zu erhöhen.

WO2005/113704 betrifft lumineszierende Verbindungen, die Carbenliganden tragen. Bei den Verbindungen kann es sich unter anderem um Iridium-(Benz-)Imidazolyliden-Carbenkomplexe handeln. Diese werden gemäß den Beispielen durch Umsetzung der entsprechenden (Benz-)Imidazoliumiodidsalze mit Ag₂O und Iridium(III)chlorid-Hydrat in einer Stufe hergestellt, wobei die Ausbeuten der gewünschten Iridiumkomplexe gering sind.

Steven P. Nolan et al. J. Am. Chem. Soc. 2004, 126, 5054-5055 betrifft cyclometallierte N-heterocyclische Carbenkomplexe (NHC) des Rhodiums. Gemäß der Beschreibung wird der doppelt cyclometallierte Komplex RhCl(N,N-Di(tert-butyl)imidazol-2-yliden))₂ durch Umsetzung von [Rh(COE)₂Cl]₂ mit N,N-Di(tert-butyl)imidazol-2-yliden) in Benzol hergestellt. Dieser kann in einer weiteren Stufe zu einem 14-Elektronen-Rh(III)-Komplex durch Umsetzung mit AgPF₆ in CH₂Cl₂ umgesetzt werden. Das Silbersalz wird in Steven P. Nolan et al. zur Abstraktion von Cl⁻ eingesetzt. Eine CH-Aktivierung liegt bereits vor der Zugabe des Silbersalzes vor.

Alfred F. Noels et al., Can. J. Chem. 79: 529-535 (2001) betrifft unter anderem die Herstellung des cyclometallierten Ru-Komplexes RuCl(p-cymen)(triazolinyliden) durch stöchiometrische Reaktion von Triazolinyliden-Carben (1,3,4-Triphenyl-4,5-dihydro-1*H-*1,2,4-triazol-5-yliden) mit dem dimeren Ru-Komplex [RuCl₂(p-cymene)]₂ unter Zugabe eines Überschusses einer Base (EtN-i-Pr₂). Aus diesem Komplex wird durch Abstraktion von Cl⁻ mit AgBF₄ in Acetonitril der entsprechende kationische Komplex erhalten. In Alfred F. Noels et al. wird das Silbersalz somit - wie in Steven P. Nolan et al. - zur Abstraktion von Cl⁻ eingesetzt. Eine CH-Aktivierung liegt bereits vor der Zugabe des Silbersalzes vor.

Aufgabe der vorliegenden Erfindung ist die Bereitstellung eines Verfahrens zur Herstellung von cyclometallierten Carbenkomplexen, insbesondere Ir(III)-Carbenkomplexen, wobei die Komplexe in guten Ausbeuten bei einfacher Reaktionsführung erhalten werden.

Diese Aufgabe wird gelöst durch ein Verfahren zur Herstellung von cyclometallierten Carbenkomplexen der allgemeinen Formel (I) enthaltend mindestens einen Carbenliganden 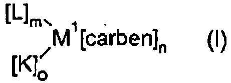 worin die Symbole die folgenden Bedeutungen aufweisen:
- M¹: Metallatom ausgewählt aus der Gruppe bestehend aus Ir und Pt, ,in jeder für das entsprechende Metallatom mö chen Oxidationsstufe, welter beverzugt Ir(I) und Ir(III), und insbesondere Ir(III);

- L: mono- oder dianionischer Ligand, der mono- oder bidentat sein kann;
- K: neutraler mono- oder bidentater Ligand;
- n: Zahl der Carbenliganden, wobei n mindestens 1, bevorzugt mindestens 2, ist und die Carbenliganden in dem Komplex der Formel 1 bei n >1 gleich oder verschieden sein können;
- m: Zahl der Liganden L, wobei m 0 oder ≥ 1 sein kann und die Liganden L bei m > 1 gleich oder verschieden sein können;
- carben: Carbenligand ausgewählt aus der Gruppe bestehend aus 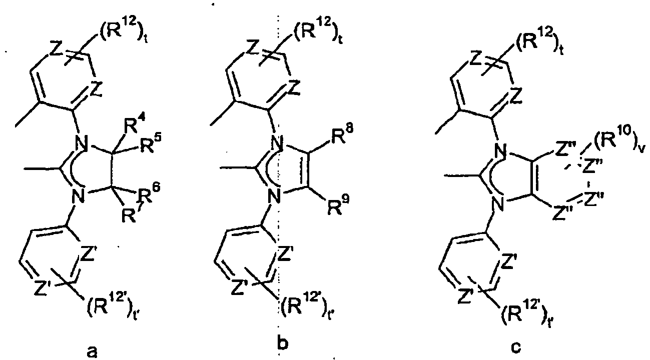 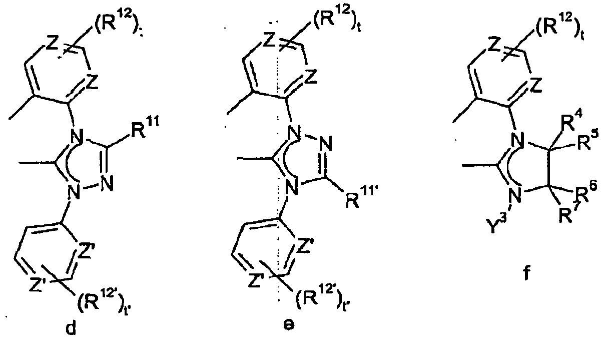 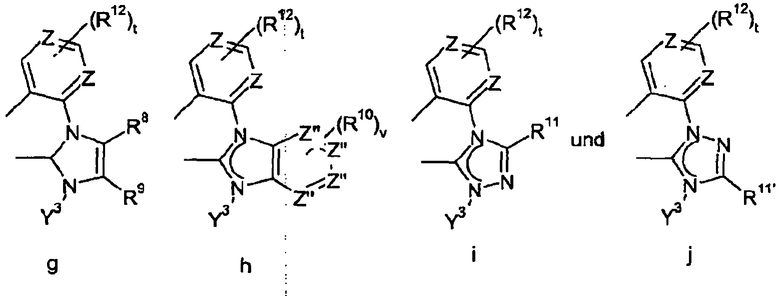 worin die Symbole die folgenden Bedeutungen aufweisen:
- Z, Z', Z": gleich oder verschieden CH oder N, wobei im Falle von Z: 0 bis 2 der Symbole Z N bedeuten können, bevorzugt 0 oder 1, und Z In dem Fall, dass 1 Symbol Z N bedeutet, in o- oder p- Position, bevorzugt in p-Position, zur Vericnüpfungsstelle der Gruppierung mit der Gruppierung 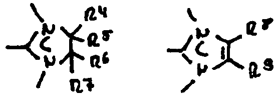 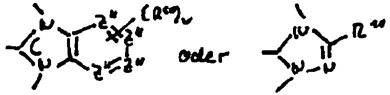 angeordnet sein kann; im Falle von Z': 0 bis 2 der Symbole Z' N bedeuten können, bevorzugt 0 oder 1, und Z' in dem Fall, dass 1 Symbol Z' N bedeutet, in o- oder p-Position, bevorzugt in p-Position, zur Verknüpfungsstelle der Gruppierung mit der Gruppierung 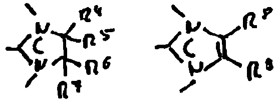 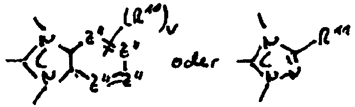 angeordnet sein kann; im Falle von Z": 0 bis 4 der Symbole Z" N bedeuten können, bevorzugt 0 bis 3, besonders bevorzugt 0 bis 2, ganz besonders bevorzugt 0 oder 1;
- R¹², R^{12'}: gleich oder verschieden ein Alkyl-, Aryl-, Heteroaryl-, Alkinyl- oder Alkenylrest, bevorzugt eln Alkyl- oder Arylrest, oder jeweils 2 Reste R¹² bzw. R^{12'} bilden gemeinsam einen anellierten Ring, der gegebenenfalls mindestens ein Heteroatom, bevorzugt N, enthalten kann, bevorzugt bilden jeweils 2 Reste R¹² bzw. R^{12'} gemeinsam einen anellierten aromatischen C₆-Ring, wobei an diesen, bevorzugt sechsgliedrigen, aromatischen Ring gegebenenfalls ein oder mehrere weitere aromatische Ringe anelliert sein können, wobei jede denkbare Anellierung möglich ist, und die anellierten Reste wiederum substituiert sein können; oder R¹² bzw. R^{12'} bedeutet einen Rest mit Donor- oder Akzeptorwirkung;
- t und t': gleich oder verschieden 0 bis 4, wobei, wenn t bzw. t' > 1 ist, die Reste R¹² bzw. R^{12'} gleich oder verschieden sein können, bevorzugt ist t bzw. t' 0 oder 1, der Rest R¹² bzw. R^{12'} befindet sich, wenn t bzw. t' 1 ist, in or- tho-, meta- oder para-Position zur Verknüpfungsstelle mit dem dem Carbenkohlenstoffatom benachbarten Stickstoffatom;
- R⁴, R⁵, R⁶, R⁷, R⁸, R⁹, R¹¹ und R^{11'}: Wasserstoff, Alkyl, Aryl, Heteroaryl, Alkinyl oder Alkenyl oder ein Rest mit Donor- oder Äkzeptorwirkung, bevorzugt Wasserstoff, Alkyl, Heteroaryl oder Aryl;
- R¹⁰: Alkyl, Aryl, Heteroaryl, Alkinyl oder Alkenyl, bevorzugt Alkyl, Heteroaryl oder Aryl, oder jeweils 2 Reste R¹⁰ bilden gemeinsam einen anellierten Ring, der gegebenenfalls mindestens ein Heteroatom, bevorzugt N, enthalten kann, bevorzugt bilden jeweils 2 Reste R¹⁰ gemeinsam einen anellierten aromatischen C₆-Ring, wobei an diesen, bevorzugt sechsgliedrigen, aromatischen Ring gegebenenfalls ein oder mehrere weitere aromatische Ringe anelliert sein können, wobei jede denkbare Anellierung möglich ist, und die anellierten Reste wiederum substituiert sein können; oder R¹⁰ bedeutet einen Rest mit Donor- oder Akzeptorwirkung;
weiterhin kann die Gruppe der Struktur 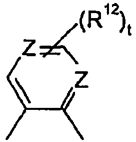 über den aromatischen Grundkörper oder über einen der Reste R¹² mit R⁴ oder R⁵ oder dem Kohlenstoffatom, mit dem R⁴ und R⁵ verknüpft sind, in den Gruppierungen a und f, R⁸ oder dem Kohlenstoffatom, mit dem R⁸ verknüpft ist, in den Gruppierungen b und g, einen der Reste R¹⁰ oder einem der Kohlenstoffatome, mit dem R¹⁰ verknüpft ist, in der Gruppierungen c und h und R¹¹ oder dem Kohlenstoffatom, mit dem R¹¹ verknüpft ist, in den Gruppierungen d und i über eine Brücke verknüpft sein, wobei die Brücke die folgenden Bedeutungen aufweisen kann:
Alkylen, Arylen, Heteroarylen, Alkinylen, Alkenylen, NR¹⁸, PR¹⁹, BR²⁰, O, S, SO, SO₂, SiR³⁰R³¹, CO, CO-O, O-CO und (CR²¹R²²)ₓ, wobei eine oder mehrere nicht benachbarte Gruppen (CR²¹R²²) durch NR¹⁸, PR¹⁹, BR²⁰, O, S, SO, SO₂, SiR³⁰R³¹, CO, CO-O, O-CO ersetzt sein können, wobei
- x: 2 bis 10; und
- R¹⁸, R¹⁹, R²⁰, R²¹, R²², R³⁰, R³¹: H, Alkyl, Aryl, Heteroaryl, Alkenyl, Alkinyl
bedeuten,
wobei in den Fällen, worin die Gruppe der Struktur 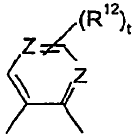 über eine Brücke mit dem Kohlenstoffatom, mit dem R⁴ und R⁵ verknüpft sind (Gruppierungen a und f), dem Kohlenstoffatom, mit dem R⁸ verknüpft ist (Gruppierungen b und g), einem der Kohlenstoffatome, mit dem R¹⁰ verknüpft ist (Gruppierungen c und h) oder dem Kohlenstoffatom, mit dem R¹¹ verknüpft ist (Gruppierungen d und i), verknüpft ist, der jeweilige Rest R⁴ oder R⁵, R⁸, einer der Reste R¹⁰ oder R¹¹ durch eine Bindung zu der Brücke ersetzt ist;
- v: 0 bis 4, bevorzugt 0, 1 oder 2, ganz besonders bevorzugt 0, wobei, wenn v 0 ist, die vier Kohlenstoffatome des Arylrests in Formel c und h, die gegebenenfalls mit R¹⁰ substituiert sind, Wasserstoffatome tragen;
- Y³: Wasserstoff, ein Alkyl-, Aryl-, Heteroaryl-, Alkinyl- oder Alkenylrest, bevorzugt ein Alkyl-, Heteroaryl- oder ein Arylrest, besonders bevorzugt ein Alkylrest.
- o: Zahl der Liganden K, wobei o 0 oder ≥ 1 sein kann und die Liganden K bei o > 1 gleich oder verschieden sein können;
wobei die Summe n + m + o von der Oxidationsstufe und Koordinationszahl des eingesetzten Metallatoms und von der Zähnigkeit der Liganden carben, L und K sowie von der Ladung der Liganden carben und L abhängig ist, mit der Bedingung, dass n mindestens 1 ist;
umfassend die Umsetzung eines Ligandvorläufers ausgewählt aus der Gruppe bestehend aus 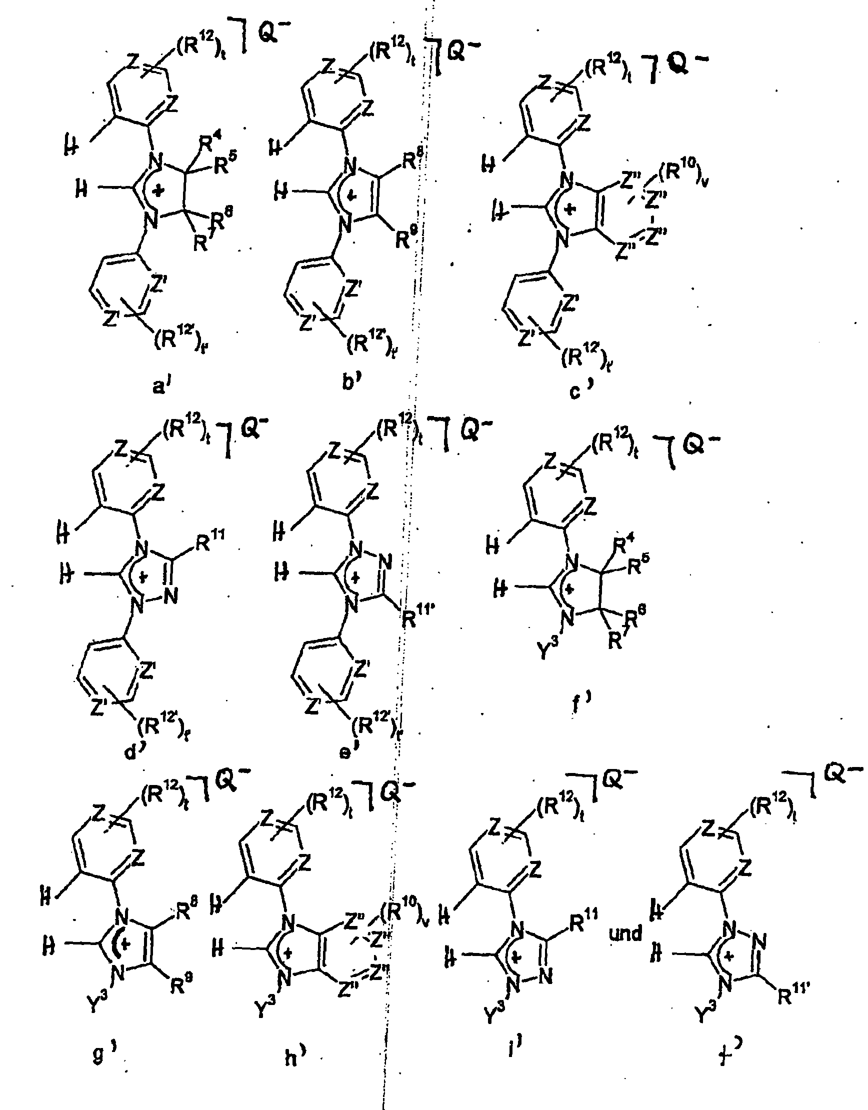 worin
- Q': ein monoanionisches Gegenion, bevorzugt Halogenid, Pseudohalogenid, BF₄⁻, BPh₄⁻, PF₆⁻, AsF₆⁻ oder SbF₆⁻;
bedeutet, und Symbole in den Ligandvorläufern der Formeln a' bis j' die bezuglich dem Liganden der Formeln a bis j genannten Bedeutungen aufweisen,
wobei
die Umsetzung den Einsatz eines basischen Hilfsreagenzes enthaltend Ag, (Weg B) umfasst, wobei der Ligandvorläufer in Schritt mit dem basischen Hilfsreagenz enthaltend Ag umgestzt wird, wobei ein geschütztes (iB) Carben erhalten wird, und (iiB) anschließend das geschützte Carben ohne weitere Auf-arbeitung und/oder Beingung mit einem Metallkomplex enthaltend mindestens ein Metall M¹ umgesetzt wird (Weg B);
wobei ein cyclometallierter Metallkomplex der Formel I erhalten wird,
wobei die Umsetzung in Schritt (iB) bei Raumtemperature in einem aprotischen Lösungsmittel oder Lösungsmittelgemisch erfolgt und die Umsetzung in Schritt (iiB) bei Temperaturen von 70 bis 150°C erfolgt.

Mit Hilfe des erfindungsgemäßen Verfahrens ist die Herstellung von cyclometallierten Übergangsmetall-Carbenkomplexen in guten Ausbeuten bei einfacher Reaktionsführung möglich.

Unter einem bidentaten Liganden ist ein Ligand zu verstehen, der an zwei Stellen an das Übergangsmetallatom M¹ koordiniert ist. Im Sinne der vorliegenden Anmeldung wird der Begriff "zweizähnig" synonym mit dem Begriff "bidentat" verwendet.

Unter einem monodentaten Liganden ist ein Ligand zu verstehen, der an einer Stelle des Liganden mit dem Übergangsmetallatom M¹ koordiniert.

In Abhängigkeit von der Koordinationszahl des eingesetzten Metalls M¹ und der Natur und Zahl der eingesetzten Liganden L und carben können verschiedene Isomere der entsprechenden Metallkomplexe bei gleichem Metall M¹ und gleicher Natur und Zahl der eingesetzten Liganden L und carben vorliegen. Zum Beispiel sind bei Komplexen mit einem Metall M¹ mit der Koordinationszahl 6 (also oktaedrischen Komplexen), zum Beispiel Ir(III)-Komplexen, sowohl cis/trans-Isomere möglich, wenn es sich um Komplexe der allgemeinen Zusammensetzung MA₂B₄ handelt, als auch fac-mer-Isomere (facial/meridional-Isomere), wenn es sich um Komplexe der allgemeinen Zusammensetzung MA₃B₃ handelt. Bei quadratisch planaren Komplexen mit einem Metall M¹ mit der Koordinationszahl 4, zum Beispiel Pt(II)-Komplexen, sind cis/trans-Isomere möglich, wenn es sich um Komplexe der allgemeinen Zusammmensetzung MA₂B₂ handelt. Bei den Symbolen A und B handelt es sich jeweils um eine Bindungsstelle eines Liganden, wobei nicht nur monodentate, sondern auch bidentate Liganden vorliegen können. Ein unsymmetrischer bidentater Ligand weist gemäß der vorstehend erwähnten allgemeinen Zusammensetzung eine Gruppe A und eine Gruppe B auf.

Dem Fachmann ist bekannt, was unter cis/trans- bzw. fac-mer-Isomeren zu verstehen ist. Bei oktaedrischen Komplexen bedeutet cis-Isomerie, dass bei Komplexen der Zusammensetzung MA₂B₄ die beiden Gruppen A benachbarte Ecken eines Oktaeders belegen, während die beiden Gruppen A bei der trans-Isomerie einander gegenüber liegende Ecken eines Oktaeders belegen. Bei Komplexen der Zusammensetzung MA₃B₃ können drei Gruppen der gleichen Art entweder die Ecken einer Oktaederfläche besetzen (faciales Isomer) oder einen Meridian, das heißt zwei der drei Ligandenbindungsstellen sind zueinander trans-ständig (meridionales Isomer). Bezüglich der Definition von cis/trans-Isomeren bzw. fac-mer-Isomeren in oktaedrischen Metallkomplexen siehe zum Beispiel J. Huheey, E. Keiter, R. Keiter, Anorganische Chemie: Prinzipien von Struktur und Reaktivität, 2., neu bearbeitete Auflage, übersetzt und erweitert von Ralf Steudel, Berlin; New York: de Gruyter, 1995, Seiten 575, 576.

Bei quadratisch planaren Komplexen bedeutet cis-Isomerie, dass bei Komplexen der Zusammensetzung MA₂B₂ sowohl die beiden Gruppen A als auch die beiden Gruppen B benachbarte Ecken eines Quadrats belegen, während sowohl die beiden Gruppen A als auch die beiden Gruppen B bei der trans-Isomerie jeweils die beiden einander diagonal gegenüber liegenden Ecken eines Quadrats belegen. Bezüglich der Definition von cis/trans-Isomeren in quadratisch planaren Metallkomplexen siehe zum Beispiel J. Huheey, E. Keiter, R, Keiter, Anorganische Chemie: prinzipien von Struktur und Reaktivität, 2., neu bearbeitete Auflage, übersetzt und erweitert von Ralf Stendel, Berlin; New York: de Gruyter, 1995, Seiten 557 bis 559.

Im Allgemeinen können die verschiedenen Isomere der Metallkomplexe der Formel I nach dem Fachmann bekannten Verfahren, zum Beispiel durch Chromatographie, Sublimation oder Kristallisation, getrennt werden.

Die vorliegende Erfindung betrifft somit sowohl die Herstellung jeweils einzelner Isomere der Übergangsmetallkomplexe der Formel I als auch die Herstellung von Gemischen verschiedener Isomere in jedem beliebigen Mischungsverhältnis.

Besonders bevorzugt weisen die erfindungsgemäß hergestellten Übergangsmetall-komplexe der allgemeinen Formel I ein Metallatom M¹ ausgewählt aus der Gruppe bestehend aus Ir(I), Ir(III) und Pt(II) auf Besonders bevorzugt wird Ir eingesetzt, bevorzugt Ir(I) und Ir(III), ganz besonders bevorzugt Ir(III).

Geeignete mono- oder dianionische Liganden L, bevorzugt monoanionische Liganden L, die mono- oder bidentat sein können, sind die üblicherweise als mono- oder bidentate mono- oder dianionische Liganden eingesetzten Liganden.

Geeignete monoanionischen monodentate Liganden sind zum Beispiel Halogenide, insbesondere cr und Br⁻, Pseudohalogenlde, Insbesondere CN⁻, Cyclopentadienyl (Cp⁻), Hydrid, Alkylreste, die mit dem Übergangsmetall M¹ über eine Sigmabindung verknüpft sind, zum Beispiel CH₃, Alkylarylreste, die mit dem Übergangsmetall M¹ über eine Sigmabindung verknüpft sind, zum Beispiel Benzyl.

Geeignete monoanionische bidentate Liganden sind zum Beispiel Acetylacetonat und dessen Derivate, Picolinat, Schiffsche Basen, Aminosäuren, Arylazole, z.B. Phenylpyridin sowie die weiteren in WO 02/15645 genannten bidentaten monoanionischen Liganden, wobei Acetylacetonat, und Picolinat bevorzugt sind.

Geeignete dianionische bidentate Liganden sind zum Beispiel Dialkoholate, Dicarbonate, Dicarboxylate, Diamide, Diimide, Dithiolate, Biscyclopentadienyle, Bisphosphonate, Bissulfonate und 3-Phenylpyrazol.

Die Zahl n der Carbenliganden beträgt in neutralen Übergangsmetallkomplexen, worin das Übergangsmetallatom Ir(III) eine Koordinationszahl von 6 aufweist, 1 bis 3, bevorzugt 2 oder 3, besonders bevorzugt 3. Ist n > 1 können die Carbenliganden gleich oder verschieden sein.

Die Zahl n der Carbenliganden beträgt in Übergangsmetallkomplexen, worin das Übergangsmetallatom Pt(II) eine Koordinationszahl von 4 aufweist, 1 oder 2, bevorzugt 2. Ist n > 1 können die Carbenliganden gleich oder verschieden sein.

Die Zahl m der monoanionischen Liganden L beträgt in dem vorstehend genannten Fall 0 bis 2, bevorzugt 0 bis 1, besonders bevorzugt 0. Ist m > 1 können die Liganden L gleich oder verschieden sein, bevorzugt sind sie gleich.

Im Folgenden sind bevorzugte verbrückte Strukturen beispielhaft genannt, die in den Ligandsystemen der Formeln a bis j, vor-kommen können

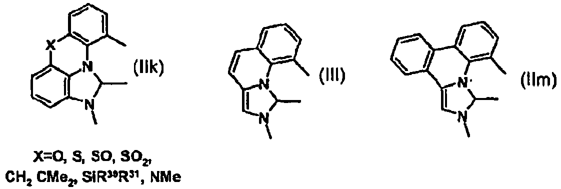

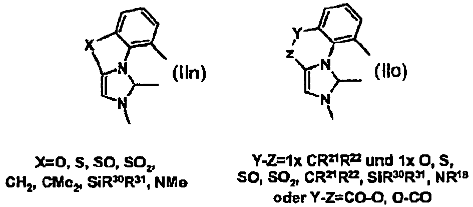

Die Reste R¹⁸, R²⁰, R²¹, R³⁰ und R³¹ wurden bereits vorstehend definiert.

Im Sinne der vorliegenden Anmeldung haben die Begriffe Arylrest oder -gruppe, Heteroarylrest oder -gruppe, Alkylrest oder -gruppe und Alkenylrest oder -gruppe und Alkinylrest oder -gruppe die folgenden Bedeutungen:

Unter einem Arylrest (oder -gruppe) ist ein Rest mit einem Grundgerüst von 6 bis 30 Kohlenstoffatomen, bevorzugt 6 bis 18 Kohlenstoffatomen zu verstehen, der aus einem aromatischen Ring oder mehreren kondensierten aromatischen Ringen aufgebaut ist. Geeignete Grundgerüste sind zum Beispiel Phenyl, Naphthyl, Anthracenyl oder Phenanthrenyl. Dieses Grundgerüst kann unsubstituiert sein (d. h., dass alle Kohlenstoffatome, die substituierbar sind, Wasserstoffatome tragen), oder an einer, mehreren oder allen substituierbaren Positionen des Grundgerüsts substituiert sein. Geeignete Substituenten sind zum Beispiel Alkylreste, bevorzugt Alkylreste mit 1 bis 8 Kohlenstoffatomen, besonders bevorzugt Methyl, Ethyl oder i-Propyl, Arylreste, bevorzugt C₆-Arylreste, die wiederum substituiert oder unsubstituiert sein können, Heteroarylreste, bevorzugt Heteroarylreste, die mindestens ein Stickstoffatom enthalten, besonders bevorzugt Pyridylreste, Alkenylreste, bevorzugt Alkenylreste, die eine Doppelbindung tragen, besonders bevorzugt Alkenylreste mit einer Doppelbindung und 1 bis 8 Kohlenstoffatomen, oder Gruppen mit Donor- oder Akzeptorwirkung. Geeignete Gruppen, mit Donor- oder Akzeptorwirkung sind nachstehend genannt. Ganz besonders bevorzugt tragen die Arylreste Substituenten ausgewählt aus der Gruppe bestehend aus Methyl, F, Cl, CN, Aryloxy und Alkoxy. Bevorzugt ist der Arylrest oder die Arylgruppe ein C₆-C₁₈-Arylrest, besonders bevorzugt ein C₆-Arylrest, der gegebenenfalls mit mindestens einem der vorstehend genannten Substituenten substituiert ist. Besonders bevorzugt weist der C₆-C₁₈-Arylrest, bevorzugt C₆-Arylrest, einen oder zwei der vorstehend genannten Substituenten auf, wobei im Falle eines C₆-Arylrests der eine Substituent in ortho-, meta- oder para-Position zur weiteren Verknüpfungsstelle des Arylrestes angeordnet ist, und - im Falle von zwei Substituenten - können diese jeweils in meta-Position oder ortho-Position zur weiteren Verknüpfungsstelle des Arylrestes angeordnet sein oder ein Rest ist in ortho-Position und ein Rest in meta-Position angeordnet oder ein Rest ist in ortho- oder meta-Position angeordnet und der weitere Rest ist in para-Position angeordnet.

Unter einem Heteroarylrest oder einer Heteroarylgruppe sind Reste zu verstehen, die sich von den vorstehend genannten Arylresten dadurch unterscheiden, dass in dem Grundgerüst der Arylreste mindestens ein Kohlenstoffatom durch ein Heteroatom ersetzt ist. Bevorzugte Heteroatome sind N, O und S. Ganz besonders bevorzugt sind ein oder zwei Kohlenstoffatome des Grundgerüsts der Arylreste durch Heteroatome ersetzt. Insbesondere bevorzugt ist das Grundgerüst ausgewählt aus elektronenreichen Systemen wie Pyridin und fünfgliedrigen Heteroaromaten wie Pyrrol, Furan, Pyrazol, Imidazol, Thiophen. Das Grundgerüst kann an einer, mehreren oder allen substituierbaren Positionen des Grundgerüsts substituiert sein. Geeignete Substituenten sind dieselben, die bereits bezüglich der Arylgruppen genannt wurden.

Unter einem Alkylrest oder einer Alkylgruppe ist ein Rest mit 1 bis 20 Kohlenstoffatomen, bevorzugt 1 bis 10 Kohlenstoffatomen, besonders bevorzugt 1 bis 8 Kohlenstoffatomen zu verstehen. Dieser Alkylrest kann verzweigt oder unverzweigt sein und gegebenenfalls mit einem oder mehreren Heteroatomen, bevorzugt Si, N, O oder S, besonders bevorzugt N, O oder S, unterbrochen sein. Des Weiteren kann dieser Alkylrest mit einem oder mehreren der bezüglich der Arylgruppen genannten Substituenten substituiert sein. Es ist ebenfalls möglich, dass der Alkylrest eine oder mehrere Arylgruppen trägt. Dabei sind alle der vorstehend aufgeführten Arylgruppen geeignet. Besonders bevorzugt sind die Alkylreste ausgewählt aus der Gruppe bestehend aus Methyl und iso-Propyl.

Unter einem Alkenylrest oder einer Alkenylgruppe ist ein Rest zu verstehen, der den vorstehend genannten Alkylresten mit mindestens zwei Kohlenstoffatomen entspricht, mit dem Unterschied, dass mindestens eine C-C-Einfachbindung des Alkylrests durch eine C-C-Doppelbindung ersetzt ist Bevorzugt weist der Alkenylrest eine oder zwei Doppelbindungen auf.

Unter einem Alkinylrest oder einer Alkinylgruppe ist ein Rest zu verstehen, der den vorstehend genannten Alkylresten mit mindestens zwei Kohlenstoffatomen entspricht, mit dem Unterschied, dass mindestens eine C-C-Einfachbindung des Alkylrests durch eine C-C-Dreifachbindung ersetzt ist. Bevorzugt weist der Alkinylrest eine oder zwei Dreifachbindungen auf.

Die Begriffe Alkylen, Arylen, Heteroarylen, Alkinylen und Alkenylen haben im Sinne der vorliegenden Anmeldung die bezüglich der Alkyl-, Aryl-, Heteroaryl-, Alkinyl- und Alkenylreste genannten Bedeutungen mit dem Unterschied, dass die Alkylen-, Arylen-, Heteroarylen-, Alkinylen- und Alkenylengruppen zwei Bindungsstellen zu Atomen des Liganden der Formel II aufweisen.

Unter einer Gruppe oder einem Substituenten mit Donor- oder Akzeptorwirkung sind im Sinne der vorliegenden Anmeldung die folgenden Gruppen zu verstehen:

Unter Gruppen mit Donorwirkung sind Gruppen zu verstehen, die einen +l- und/oder +M-Effekt aufweisen, und unter Gruppen mit Akzeptorwirkung sind Gruppen zu verstehen, die einen -l- und/oder ―M-Effekt aufweisen. Geeignete Gruppen, mit Donor- oder Akzeptorwirkung sind Halogenreste, bevorzugt F, Cl, Br, besonders bevorzugt F, Alkoxyreste, Aryloxyreste, Carbonylreste, Esterreste, sowohl Oxycarbonyl als auch Carbonyloxy, Aminreste, Amidreste, CH₂F-Gruppen, CHF₂-Gruppen, CH₂F-Gruppen, CF₃-Gruppen, CN-Gruppen, Thiogruppen, Sulfonsäuregruppen, Sulfonsäureestergruppen, Boronsäuregruppen, Boronsäureestergruppen, Phosphonsäuregruppen, Phosphonsäureestergruppen, Phosphinreste, Suffoxidreste, Sulfonylreste, Sulfidreste, Nitrogruppen, OCN, Boranreste, Silylgruppen, Stannatreste, Iminogruppen, Hydrazinreste, Hydrazonreste, Oximreste, Nitrosogruppen, Diazogruppen, Phosphinoxidgruppen, Hydroxygruppen oder SCN-Gruppen. Ganz besonders bevorzugt sind F, Cl, CN, Aryloxy und Alkoxy.

Die mit Hilfe des erfindungsgemäßen Verfahrens hergestellten Übergangsmetall-Komplexe der Formel I können - wenn ein Metallatom M¹ mit der Koordinationszahl 6 eingesetzt wird - als faciales oder meridionales isomer oder Isomerengemisch aus facialem und meridionalem Isomer in beliebigen Mengenverhältnissen vorliegen, wenn sie eine Zusammensetzung MA₃B₃ - wie vorstehend ausgeführt - aufweisen. Beispielsweise sind faciale und meridionale isomere des Übergangsmetallkomplexes der Formel I möglich, wenn n 3 bedeutet und m 0 bedeutet. Für den Fall, dass die Übergangsmetall-Komplexe der Formel I eine Zusammensetzung MA₂B₄ aufweisen, können die Übergangsmetallkomplexe in Form von cis/trans Isomeren in beliebigen Mengenverhältnissen vorlieben, wie vorstehend ausgeführt. Cis/trans-Isomere von Komplexen der Formel I sind zum Beispiel möglich, wenn M¹ ein Metallatom mit der Koordinationszahl 6 ist und wenn n 2 bedeutet und m 2 bedeutet, wobei die beiden monodentaten Liganden L gleich sind.

Für neutrale Übergangsmetallkomplexe, worin das Übergangsmetallatom Ir(III) eine Koordinationszahl von 6 hat, ist die Zahl der bevorzugten monoanionischen bidentaten Carbenliganden n mindestens 1 und maximal 3. Bevorzugt ist die Zahl der bevorzugt eingesetzten monanionischen bidentaten Carbenliganden 2 oder 3, besonders bevorzugt 3. Dabei können die Carbenliganden bei n > 1 gleich oder verschieden sein.

Die Übergangsmetall-Komplexe der Formel I können - wenn ein Metallatom M¹ mit der Koordinationszahl 4 eingesetzt wird, das quadratisch planare Komplexe bildet - als cis-oder trans-Isomere oder als Isomerengemisch aus cis- oder trans-Isomeren in beliebigen Mengenverhältnissen vorliegen, wenn sie eine Zusammensetzung MA₂B₂ - wie vorstehend ausgeführt - aufweisen. Beispielsweise sind cis/trans-Isomere der Übergangsmetall-Komplexe der Formel I möglich, wenn n 2 bedeutet und m 0 bedeutet.

Für neutrale Übergansmetallkomplexe, worin das Übergangsmetallatom Pt(II) eine Koordinationszahl von 4 hat, ist die Zahl n der bevorzugten monoanionischen bidentaten Carbenliganden n 1 oder 2, bevorzugt 1. Dabei können die Carbenliganden bei n = 2 gleich oder verschieden sein.

Ganz besonders bevorzugt wird mit Hilfe des erfindungsgemäßen Verfahrens ein Übergangsmetallkomplex hergestellt, worin M¹ Ir(III) ist, das eine Koordinationszahl von 6 aufweist. Ganz besonders bevorzugt ist n in diesem Ir(III)-Komplex 3 und m 0 **,** wobei die übrigen Symbole die bereits vorstehend genannten Bedeutungen aufweisen.

Die cyclometallierten Carbenkomplexe der Formel I werden erfindungsgemäß durch Umsetzung eines Ligandvorläufers ausgewählt aus der Gruppe bestehend aus 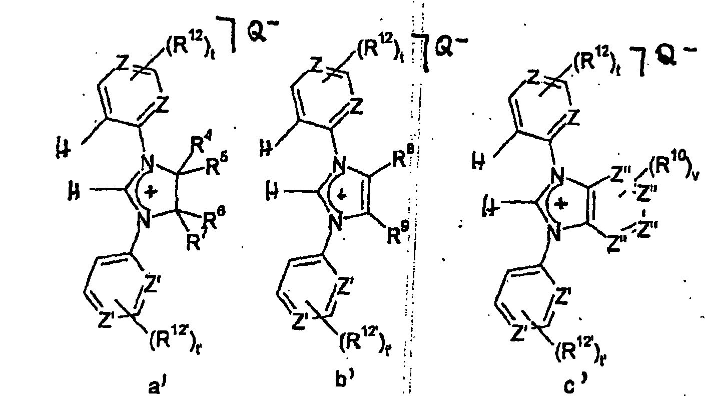 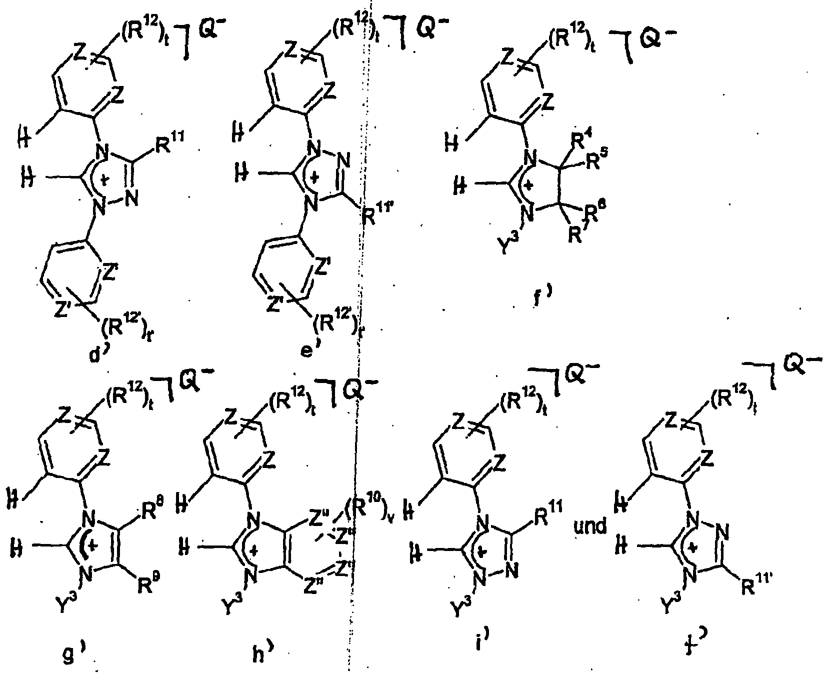 worin
- Q⁻: ein monoanionisches Gegenion, bevorzugt Halogenid, z.B. F, Cl⁻, Br⁻, I⁻, Pseudohalogenid, BF₄⁻, BPh₄⁻, PF₆⁻, AsF₆⁻ oder SbF₆⁻, besonders bevorzugt Halogenid, z.B. F⁻, Cl⁻, Br⁻, I⁻, oder BF₄⁻, ganz besonders bevorzugt r oder BF₄⁻;
bedeutet, und
die weiteren Symbole in den Ligandvorläufern der Formeln a' bis j' die bezüglich den Liganden der Formeln a bis j genannten Bedeutungen aufweisen, erhalten,
wobei
die Umsetzung den Einsatz eines basischen Hilfsreagenzes enthaltend Ag (Weg B) umfasst, wobei der Ligandvorläufer
in Schritt
mit dem basischen Hilfsreagenz enthaltend Ag umgesetzt wird, wobei ein geschütztes
(iB) Carben erhalten wird, und
(iiB) anschlleßend das geschützte Carben mit einem Metallkomplex enthaltend mindestens ein Metall M¹ umgesetzt wird (Weg B),
wobei die Umsetzung in Schritt (iB) bei Raumtemperatur in einem aprotischen Lösungsmittel oder Lösungsmittel gemisch erfolgt und die Umsetzung in Schritt (iiB) bei Temperaturen von 70 bis 150°C erfolgt.

Die Herstellung der Ligandvorläufer erfolgt nach dem Fachmann bekannten Verfahren. Geeignete Verfahren sind z.B. in WO 2005/019373 und der darin zitierten Literatur, z.B. Organic Letters, 1999, 1, 953-956; Angewandte Chemie, 2000, 112, 1672-1674 genannt. Weitere geeignete Verfahren sind z.B. in T. Weskamp et al., J. Organometal. Chem. 2000, 600, 12-22; G. Xu et al., Org. Lett. 2005, 7, 4605-4608 ; V. Lavallo et al., Angew. Chem. Int. Ed. 2005, 44, 5705-5709 genannt. Einige der geeigneten Ligandvorläufer sind kommerziell erhältlich.

Gemäß dem erfindungsgemäßen Verfahren erfolgt die Umsetzung des Ligandvorläufers in Anwesenheit eines basischen Hilfsreagenzes (Weg B). Es wurde gefunden, dass mit Hilfe des erfindungsgemäßen Verfahrens cyclometallierte Metallkomplexe der Formel I in guten Ausbeuten erhältlich sind.

In einer bevorzugten Ausführungsform des erfindungsgemäßen Verfahrens, werden der Metallkomplex enthaltend mindestens ein Metall M¹, der Ligandvorläufer und das basische Hilfsreagenz (Weg B) in bestimmten Verhältnissen zueinander eingesetzt

Bezüglich Weg B des erfindungsgemäßen Verfahrens beträgt das Verhältnis von Metallkomplex enthaltend mindestens ein Metall M¹, Ligandvortäufer und basischem Hilfsreagenz bevorzugt 1 : 1-10 : 0,5-5 pro Metallatom M¹ und Zahl der Carbenliganden n, besonders bevorzugt 1 : 1-5 : 0,5-2,5, ganz besonders bevorzugt 1 : 1-3 : 0,5-1,5.

Das erfindungsgemäße Verfahren wird in einem aprotischen Lösungsmittel durchgeführt. Dabei sind unter dem Begriff Lösungsmittel sowohl einzelne Lösungsmittel als auch Lösungsmittelgemische zu verstehen. Besonders bevorzugt ist das Lösungsmittel ausgewählt aus mindestens einem Lösungsmittel ausgewählt aus der Gruppe bestehend aus Dioxan, Butanon, THF, Toluol, Xylol, DMF, Acetonitril, DMSO, NMP und Pyridin. Ganz besonders bevorzugt wird ein Lösungsmittel eingesetzt, das Dioxan als einziges Lösungsmittel oder im Gemisch mit einem der vorstehend genannten Lösungsmittel enthält. Überraschenderweise wurde gefunden, dass bei einer Durchführung des erfindungsgemäßen Verfahrens in einem Lösungsmittel enthaltend Dioxan besonders gute Ausbeuten erzielt werden können.

Bei dem Metallkomplex enthaltend mindestens ein Metall M¹ handelt es sich um einen Metallkomplex enthaltend mindestens ein Metall ausgewählt aus der Gruppe bestehend aus Ir und Pt bevorzugt Ir, in jeder für das entsprechende Metallatom möglichen Oxidationsstufe, bevorzugt Ir(I) oder Ir(III), besonders bevorzugt Ir(I). Geeignete Metallkomplexe sind dem Fachmann bekannt. Beispiele für geeignete Metallkomplexe sind Pt(cod)Cl₂, Pt(cod)Me₂, Pt(acac)₂, Pt(PPh₃)₂Cl₂, PtCl₂, sowie [(µ-Cl)Ir(η⁴-1,5-cod)]₂, [(µ-Cl)Ir(η²-coe)₂]₂, Ir(acac)₃, IrCl₃ x n H₂O, (tht)₃IrCl₃, Ir(η³-Allyl)₃, Ir(η³-Methallyl)₃, worin cod Cyclooctadien, coe Cycloocten, acac Acetylacetonat und tht Tetrahydrothiophen bedeuten. Die Metallkomplexe können gemäß dem Fachmann bekannten Verfahren hergestellt werden bzw. sind kommerziell erhältlich.

Bei der Herstellung von Iridium(III)-Komplexen der allgemeinen Formel I (M¹ in Formel I ist Ir), die gemäß der vorliegenden Anmeldung besonders bevorzugt sind, können beispielsweise Iridium(I)- oder (III)-Komplexe eingesetzt werden, insbesondere [(µ-Cl)Ir(η⁴-1,5-cod)]₂, [(µ-Cl)Ir(η²-coe)₂]₂, Ir(acac)₃, IrCl₃ x n H₂O, (tht)₃IrCl₃, Ir(η³-Allyl)₃, Ir(η³-Methallyl)₃, worin cod Cyclooctadien, coe Cycloocten, acac Acetylacetonat und tht Tetrahydrothiophen bedeuten. Besonders bevorzugt werden Ir(I)-Komplexe eingesetzt, ganz besonders bevorzugt [(µ-Cl)Ir(η⁴-1,5-cod)]₂ oder [(µ-Cl)Ir(η²-coe)₂]₂.

Das in dem erfindungsgemäßen Verfahren Weg B eingesetzte basische Hilfsreagenz enthält Ag.

### Weg B

Das erfindungsgemäße Verfahren umfasst gemäß Weg B die Umsetzung der Ligandvorläufer der allgemeinen Formel III mit dem basischen Hilfsreagenz enthaltend Ag, wobei ein geschütztes Carben erhalten wird, und anschließende Umsetzung des geschützten Carbens mit einem Metallkomplex enthaltend mindestens ein Metall M¹.

Geeignete Verhältnisse von Metallkomplex enthaltend mindestens ein Metall M¹, Ligandvorläufer, und basischem Hilfsreagenz, geeignete Lösungsmittel, sowie geeignete Metallkomplexe enthaltend mindestens ein Metall M¹ wurden bereits vorstehend genannt.

Die basischen Hilfsreagenzien enthalten Ag. Geeignete basische Hilfsreagenzien sind die Oxide, Carbonate, Acetate und/oder Sulfide, bevorzugt Ag₂O, Ag₂CO₃, AgOAc und/oder Ag₂S. In einer weiteren bevorzugten Ausführungsform werden die Oxide der vorstehend genannten Metalle eingesetzt, besonders bevorzugt ist Silber(I)oxid, Ag₂O.

Die Reaktionsdauer gemäß Weg B beträgt im Allgemeinen 1 bis 100 h, bevorzugt 6 bis 56 h.

Die Umsetzung gemäß Weg B des erfindungsgemäßen Verfahrens erfolgt mehrstufig gemäß den folgenden Schritten:
(iB) Umsetzung des Ligandvorläufers mit dem basischen Hilfsreagenz enthaltend Ag, wobei ein Metall-Carben-Komplex erhalten wird,
(iiB) anschließende Umsetzung des Metall-Carben-Komplexes mit einem Metallkomplex enthaltend mindestens ein Metall M¹,
wobei ein cyclometallierter Metallkomplex der Formel I erhalten wird.

Die Umsetzung erfolgt in einem der vorstehend genannten Lösungsmittel oder Lösungsmittelgemische. Geeignete Ligandvorläufer, Metallkomplexe enthaltend mindestens ein Metall M¹ und basische Hilfsreagenzien wurden bereits vorstehend genannt.

### Schritt (iB)

Die Umsetzung in Schritt (iB) erfolgt bei Raumtemperatur in einem aprotischen Lösungsmittel oder Lösungsmittelgemisch. Es wird ein Metall-Carben-Komplex erhalten.

### Schritt (iiB)

Der in Schritt (iB) erhaltene Metall-Carben-Komplex wird in Schritt (iiB) mit dem Metallkomplex enthaltend mindestens ein Metall M¹ umgesetzt. In einer bevorzugten Ausführungsform wird der Metallkomplex enthaltend mindestens ein Metall M¹ zu dem in Schritt (iB) erhaltenen Metall-Carben-Komplex gegeben. Die Reaktionsmischung wird bei Temperaturen von 70 bis 150°C gerührt.

Nach der vorstehend angegebenen Reaktionsdauer wird der üblicherweise entstandene Niederschlag im Allgemeinen abfiltriert und mit dem bevorzugt eingesetzten Lösungsmittel oder Lösungsmittelgemisch gewaschen. Das erhaltene Filtrat wird im Allgemeinen gemäß dem Fachmann bekannten Verfahren bis zur Trockne eingeengt, üblicherweise durch Entfernen des Lösungsmittels im Vakuum. Das erhaltene Reaktionsprodukt wird im Allgemeinen weiter aufgearbeitet und/oder gereinigt.

Üblicherwelse erfolgen die Aufarbeitung und Reinigung durch Extraktion, Säulenchromatographie und/oder Umkristallisation gemäß dem Fachmann bekannten Verfahren.

Der in Schritt (iB) erhaltene Metall-Carben-Komplex eingesetzt wird ohne weitere Aufarbeitung und/oder Reinigung in dem nachfolgenden Schritt (iiB) eingesetzt.

Mit Hilfe des erfindungsgemäßen zweistufigen Verfahrens gemäß Weg B umfassend den Einsatz eines basischen Hilfsrseagenzes können die gewünschten cyclometallierten Carbenkomplexe der Formel I in guten Ausbeuten und in hoher Reinheit erhalten werden.

Wird das erfindungsgemäße Verfahren gemäß B zur Herstellung von cyclometallierten Carbenkomplexen der Formel I eingesetzt, die cis/trans-Isomere oder fac-mer-Isomere (facial/meridional-Isomere) bilden können, wird gemäß dem erfindungsgemäßen Verfahren im allgemeinen eine Mischung der cis/trans-Isomere oder fac-mer-Isomere (facial/meridional-Isomere) erhalten. Diese Isomermischungen können gemäß dem Fachmann bekannten Verfahren getrennt werden, so dass jeweils die reinen cis- oder trans-Isomere bzw. fac- oder mer-Isomere erhältlich sind.

Die nachfolgenden Beispiele erläutern die Erfindung zusätzlich.

### Beispiele

### Methode B zur Komplexsynthese:

Eine Suspension von (Benz-)Imidazolium-Salz (5 eq) und Silber(I)oxid (2.5 eq) in Dioxan wird 16 h bei Raumtemperatur unter Argon gerührt. Die Mischung wird mit 1,5-Cyclooctadien-iridium(I)chlorid-Dimer (0.5 eq) versetzt und 16 h unter Rückfluß gerührt. Nach Abkühlung auf Raumtemperatur wird der Niederschlag abfiltriert und mit Dioxan gewaschen. Die vereinigten Filtrate werden zur Trockne eingeengt und das Rohprodukt wird säulenchromatographisch über basischem Aluminiumoxid gereinigt.

### Beispiel 1 Synthese von Ir(cn-pmic)₃

### Synthese von 1-(4-Cyanophenyl)imidazol

Unter Stickstoff-Überleitung werden 1500 mL trockenes Dimethylformamid (DMF) in einem 1000-mL-Vierhalskolben vorgelegt und 72.67 g (0.6 mol) 4-Fluor-cyanobenzol und 61.2 g (0.9 mol) Imidazol sowie zuletzt 21.6 g (0.9 mol) Natriumhydrid zugegeben. Die Reaktionsmischung wird auf 100°C erhitzt, 4 Stunden bei dieser Temperatur und anschließend über Nacht bei Raumtemperatur gerührt. Das Reaktionsgemisch wird danach auf Wasser gegossen und das resultierende Gemisch mit Dichlormethan mehrfach extrahiert. Die organische Phase wird getrocknet, am Rotationsverdampfer eingeengt und schließlich im Vakuum bei 60 °C nachgetrocknet. Die Ausbeute beträgt 94g (93% d.Th.).
¹H-NMR (400 MHz, CDCl₃): δ = 7.27 (s, 1 H); 7.35 (s, 1 H); 7.54 (d, J = 8.8 Hz, 2 H); 7.81 (d, J = 8.8 Hz, 2 H); 7.95 (s, 1 H).

### Synthese von 1-(4-Cyanophenyl)-3-methylimidazoliumiodid

56 g (0.33 mol) 1-(4-Cyanophenyl)imidazol werden in einem 2000-mL-Einhalskolben mit Kühler in 560 mL wassersfreiem Tetrahydrofuran gelöst, mit 234.2 g (1.65 mol) Methyliodid versetzt, kurz durchgerührt und ohne weiteres Rühren 48 Stunden stehengelassen. Der feste Kolbeninhalt wird anschließend mit Ethanol aufgeschlämmt, abgesaugt und mit Ethanol nachgewaschen bis der Ablauf praktisch farblos ist. Der Rückstand wird bei 70°C im Vakuum getrocknet. Die Ausbeute beträgt 81.54g (80% d.Th.).
¹H-NMR (400 MHz, DMSO): δ = 3.97 (s, 3 H); 8.00-8.04 (m, 3 H); 8.22 (d, J = 9.0 Hz, 2 H); 8.40 (dd, J = 1.8, 1.8 Hz, 1 H); 9.91 (s, 1 H). Elementaranalyse: berechnet für C₁₁H₁₀IN₃: C 42.4, H 3.3, N 13.5, I 40.0, gefunden: C 42.6, H 2.9, N 13.6, I 40.9.

### Synthese von mer-Tris-[1-(4'-cyanophenyl)-3-methylimidazol-2-yliden-C²,C²]-iridium(III)

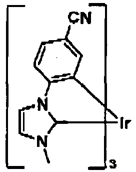

### Synthesevorschrift 2:

Das Produkt wird nach Methode B hergestellt und mit Dichlormethan eluiert. Das erhaltene Isomerengemisch wird säulenchromatographisch über Kieselgel mit Essigester/Cyclohexan 9:1 oder durch fraktionierte Fällung aus Acetonitril getrennt. Ausbeute: 75% *mer*-Isomer und 4% *fac*-Isomer.

### Vergleichsbeispiel 1:

### Synthesevorschrift 3 (wie Methode B ohne Ag-Salz):

In einem 500-ml-Dreihalskolben werden 10 g (32 mmol) des Imidazoliumiodids in 150 mL Dioxan vorgelegt und bei Raumtemperatur innerhalb von 30 Minuten 64.3 mL Kalium-bis(trimethylsilyl)amid (0.5 M in Toluol, 32 mmol) zugesetzt. Man rührt eine Stunde bei Raumtemperatur bevor man das Gemisch innerhalb von 30 min unter Argon zu einer Suspension von 2.16 g (3.2mmol) 1,5-Cyclooctadien-iridium(I)chlorid-Dimer in 200 mL Dioxan gibt. Die Reaktionsmischung wird eine Stunde bei Raumtemperatur gerührt, zwei Stunden bei 70 °C und 22 Stunden unter Rückfluss. Der Ansatz wird anschließend bis zur Trockene eingeengt und der Rückstand mit Methylenchlorid extrahiert. Aus dem Extrakt erhält man nach säulenchromatographischer Aufreinigung das Produkt als gelbliches Pulver (24% d.Th.).

Die Ausbeute an dem gewünschten Produkt ist in Vergleichsbeispiel 1 deutlich geringer als in Beispiel 1 (Synthesevorschriften 1 und 2) gemäß dem erfindungsgemäßen Verfahren.
¹H-NMR (CD₂Cl₂, 400 MHz): δ = 2.97 (s, 3H), 3.05 (s, 6H), 6.77 (d, *J* 2.0, 1 H), 6.85 (d, *J* 2.0, 1 H), 6.88 (d, *J* 2.5, 1 H), 6.89 (d, *J* 2.0, 1 H), 6.98-7.00 (m, 1 H), 7.04-7.05 (m, 1 H), 7.21-7.30 (m, 6H), 7.46 (d, *J* 2.0, 1H), 7.52 (d, *J* 2.0, 1H), 7.53 (d, *J* 2.0, 1H).

### Beispiel 2 Synthese von Ir(cn-pmbic)₃

### Synthese von 1-(4-Cyanophenyl)benzimidazol (K. Nishiura, Y. Urawa, S. Soda, Adv. Synth. Catal. 2004, 346, 1679)

Natriumhydrid (60%ig in Mineralalöl; 24.0 g 0.60 mol) wird in einem Kolben vorgelegt und mit N,N-Dimethylformamid (80 ml) versetzt. Zu dieser Suspension wird über 1 h eine Lösung aus Benzimidazol (73.3 g, 0.60 mol) in N,N-Dimethylformamid (250 ml) zugetropft. Nach beendeter H₂-Entwicklung wird 4-Chlorbenzonitril (55.6 g, 0.40 mol) zugegeben und anschließend 10.5 h auf 130 °C erwärmt. Nach Abkühlen auf RT wird das Reaktionsgemisch auf Wasser (4 L) gegeben und der gebildete Rückstand abgesaugt, mit Wasser gewaschen und im Vakuum getrocknet. Es werden 90.6 g 1-(4-cyanophenyl)benzimidazol erhalten, das noch Verunreinigungen an Mineralöl enthält.
¹H-NMR (400 MHz, CD₂Cl₂): δ = 7.35-7.41 (m, 2 H), 7.59-7.63 (m, 1 H), 7.70 (d, J = 8.5 Hz, 2 H), 7.83-7.86 (m, 1 H), 7.90 (d, J = 8.5 Hz, 2 H), 8.15 (s, 1 H).

### Synthese von 1-(4-Cyanophenyl)-3-methyl-benzimidazoliumiodid

1-(4-Cyanophenyl)benzimidazol (90 g, leicht verunreinigt durch Mineralöl) wird in THF (250 ml) vorgelegt, mit Methyliodid (116 g, 0.82 mol) versetzt und 25.5 h bei 40 °C belassen. Der gebildete Rückstand wird abfiltriert, mit Ethanol gewaschen und im Vakuum getrocknet. Es werden 123 g 1-(4-cyanophenyl)-3-methyl-benzimidazoliumiodid erhalten.
¹H-NMR (400 MHz, DMSO): δ = 4.20 (s, 3 H), 7.74-7.84 (m, 2 H), 7.93 (d, J = 8.4 Hz, 1 H), 8.07 (d, J = 8.8 Hz, 2 H), 8.18 (d, J = 8.4 Hz, 1 H), 8.30 (d, J = 8.8 Hz, 2 H), 10.24 (s, 1 H).

### Synthese von mer-Tris-[1-(4'-cyanophenyl)-3-methylbenzimidazol-2-yliden-C²,C^{2'}]-iridium(III)

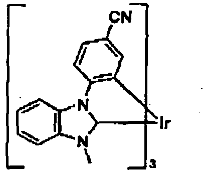

### Synthesevorschrift 2:

Das Produkt wird nach Methode B hergestellt und mit Essigester/Methanol 2:1 eluiert. Ausbeute: 65%.
¹H-NMR (*d₆*-DMSO, 500 MHz): δ = 3.18 (s, 3H), 3.22 (s, 3H), 3.29 (s, 3H), 6.81 (d, J 2.0, 1 H), 7.03 (d, J 2.0, 1H), 7.10 (d, J 2.0, 1 H), 7.30-7.47 (m, 12H), 7.94 (d, *J* 8.0, 1H), 7.95 (d, J 3.5, 1H), 7.97 (d, *J* 3.5, 1H), 8.15 (d, *J* 8.0, 1H), 8.16 (d, *J* 3.5, 1H), 8.17 (d, J 3.5, 1H). ¹³C-NMR (CD₂Cl₂, 125 MHz): δ = 187.0, 185.0, 183.7 (NCN), 153.4, 152.6, 151.8, 150.5, 149.7, 147.5 (Cq bzw. CN), 141.9, 141.7, 139.9 (CH_{Ph}), 137.10, 137.07, 136.7, 132.63 (2), 132.59 (Cq bzw. CN), 127.1, 127.0, 126.7, 124.3, 124.2 (2), 123.71, 123.66, 123.5, (CH_{Ph}), 120.68, 120.66, 120.65 (Cq bzw. CN), 113.1, 112.9, 112.5, 112.2, 112.1, 111.9, 111.1, 110.9 (2) (CH_{Ph}), 108.6, 108.3, 108.2 (Cq bzw. CN), 34.3, 34.2, 33.5 (NCH₃). Thermogravimetrie/Differentialthermoanalyse (Aufheizrate: 5K/min): Verlust von Lösungsmittel ab ca. 30 °C; Beginn der Zersetzung ca. 410°C. HPLC: > 99.8 FI% (Säule: Purospher Star Si 5 µm, Eluent : Heptan/*i*Propanol = 65/35 (Vol%)).

### Beispiel 3 Synthese von Ir(pmic)₃

### Synthese von mer-Tris-[1-phenyl-3-methylimidazol-2-yliden-C²,C^{2'}]-iridium(III)

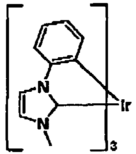

Ligandensynthese siehe WO 2005/113704.

### Synthesevorschrift 1 (zweistufiges Verfahren, Weg B)

Das Produkt wird nach Methode B hergestellt und mit Essigester/Cyclohexan 1:1 eluiert. Ausbeute: 64%.
¹H-NMR (CD₂Cl₂, 400 MHz): δ = 2.96 (s, 3H), 3.04 (s, 3H), 3.05 (s, 3H), 6.55-6.67 (m, 4H), 6.73-6.88 (m, 8H), 7.09-7.14 (m, 3H), 7.36 (d, *J* 2.0, 1H), 7.42 (d, *J* 2.0, 1 H), 7.46 (d, J 2.0, 1 H).

### Vergleichsbeispiel 3:

### Synthesevorschrift 2 (mit Ag₂O im Eintopfverfahren)

(T. Sajoto et al., Inorg. Chem. 2005, 44, 7992-8003)
Ein 50 ml Rundkolben wird mit Silber(I)oxid (0.076 g, 0.328 mol), 1-Phenyl-3-methylimidazoliumiodid (0.109 g, 0.381 mmol), Iridiumtrichlorid-Hydrat (0.029 g, 0.097 mmol) und 20 mL of 2-Ethoxyethanol befüllt. Die Reaktionsmischung wird gerührt und mit einem Ölbad für 15 h auf 120°C unter Stickstoff erhitzt, wobei die Reaktionsmischung mit Aluminiumfolie vor Licht geschützt wird. Die Reaktionsmischung wird auf Raumtemperatur gekühlt und unter reduziertem Druck eingeengt. Um die Silber(I)-Salze zu entfemen wird mit Dichlorethan als Eluent über Celite filtriert. Nach Entfernung des Lösungsmittels im Vakuum wird ein weißer Feststoff erhalten, der mit Methanol gewaschen wird. Es werden 0.016g (24% Ausbeute) des meridionalen tris-Iridiumkomplexes in Form eines weißen Feststoffs erhalten.

Die Ausbeute an dem gewünschten Produkt ist in Vergleichsbeispiel 3 deutlich geringer als in Beispiel 3 gemäß dem erfindungsgemäßen Verfahren.

### Beispiel 5 Synthese von Ir(pymic)₃

### Synthese von 1-(4'-Pyridyl)-3-methylimidazolium-chlorid

4-Chlorpyridin-hydrochlorid (91.6 g, 0.61 mol) wird mit gesättigter Natriumhydrogencarbonat-Lösung versetzt und viermal mit Dichlormethan extrahiert. Die vereinigten organischen Phasen werden über Natriumsulfat getrocknet, filtriert und zur Trockne eingeengt. Das erhaltene Öl (52.7 g, 0.46 mol) wird mit Methylimidazol (38.1 g, 0.46 mol) versetzt und 6 h bei 130 °C gerührt. Nach Abkühlung auf Raumtemperatur wird die Mischung in Ethanol gelöst und das Produkt durch Zugabe von *n*-Hexan ausgefällt. Ausbeute: 56.7 g (0.29 mol, 63%).
¹H-NMR (*d₆*-DMSO, 400 MHz): δ = 4.00 (s, 3H), 7.98 (dd, J 4.5, 1.5, 2H), 8.07 (m, 1H), 8.58 (m, 1 H), 8.86 (dd, J 4.5, 1.5, 2H), 10.42 (s, 1 H).

### Synthese von mer-Tris-[1-(4'-pyridyl)-3-methylimidazol-2-yliden-C²,C^{2'}]-iridium(III)

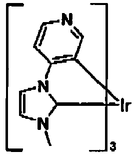

Das Produkt wird nach Methode B in Pyridin als Lösungsmittel hergestellt und mit Isobutanol eluiert. Ausbeute: 46%.
¹H-NMR (CD₂Cl₂, 400 MHz): δ = 3.03 (s, 3H), 3.07 (s, 3H), 3.10 (s, 3H), 6.82-6.86 (m, 3H), 7.02-7.06 (m, 3H), 7.45 (d, *J* 2.0, 1 H), 7.51 (d, *J* 2.0, 1H), 7.54 (d, *J* 2.0, 1 H), 7.66 (d, *J* 0.5, 1 H), 7.80 (d, *J* 0.5, 1 H), 7.89 (d, *J* 0.5, 1 H), 8.04 (d, *J* 5.0, 1 H), 8.07 (d, *J* 5.0, 1 H), 8.08 (d, J 5.0, 1 H). ESI-MS (MeCN/H₂O 8:2): *m*/*z* = 666.1844 (M+H⁺, korrektes Isotopenmuster, ber.: 666.1839).

### Beispiel 7 Synthese von Pt(cn-pmic)(acac)

### Synthese von 1-(2-Brom-4-cyanophenyl)-imidazol

3-Brom-4-fluorbenzonitril (10.0 g, 50 mmol, 1 eq) und Imidazol (5.1 g, 75 mmol, 1.5 eq) werden in Dimethylformamid (100 mL) gelöst und unter Stickstoff bei Raumtemperatur vorsichtig mit Natriumhydrid (60% in Mineralöl, 3.0 g, 75 mmol, 1.5 eq) versetzt. Die Mischung wird 4 h bei 100 °C gerührt. Nach Abkühlung auf Raumtemperatur wird Wasser (10 mL) zugegeben und zur Trockne eingeengt. Der Rückstand wird mit Wasser und Petrolether gewaschen und säulenchromatographisch (Kieselgel, Methyl-*tert-*butylether-Essigester-Gradient) gereinigt.
Ausbeute: 5.4 g (22 mmol, 44%).
¹H-NMR (CD₂Cl₂, 400 MHz): δ = 7.15 (m_{c}, 1 H), 7.52 (m_{c}, 1 H), 7.74 (d, J 8.0, 1 H), 7.99 (m_{c}, 1 H), 8.06 (dd, J 8.0, 2.0, 1 H), 8.48 (d, J 2.0, 1 H).

### Synthese von 1-(2-Brom-4-cyanophenyl)-3-methylimidazolium-iodid

1-(2-Brom-4-cyanophenyl)-imidazol (5.4 g, 22 mmol, 1 eq) und Methyliodid (15.4 g, 109.0 mmol, 5 eq) werden in Tetrahydrofuran (50 ml) gelöst und 16 h bei Raumtemperatur gerührt. Der gebildete Niederschlag wird abfiltriert und mit Ethanol gewaschen.
Ausbeute: 6.7 g (17 mmol, 78%).
¹H-NMR (*d₆*-DMSO/CD₂Cl₂ 1:1, 400 MHz): δ = 4.17 (s, 3H), 7.77 (t, J 2.0, 1 H), 7.90 (t, J 2.0, 1 H), 7.96 (dd, J 8.0, 2.0, 1 H), 8.16 (d, J 8.0, 1 H), 8.20 (d, J 2.0, 1 H), 9.96 (s, 1 H).

### Synthese von [1-(4'-cyanophenyl)-3-methylimidazol-2-yliden-C²,C^{2'}]-platin(II)-acetylacetonat

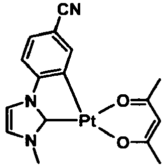

Eine Suspension von 1-(2-Brom-4-cyanophenyl)-3-methylimidazolium-iodid (0.62 g, 1.6 mmol, 1 eq) und Silber(I)oxid (0.19 g, 0.8 mmol, 0.5 eq) in Dioxan (80 mL) wird 16 h bei Raumtemperatur unter Argon gerührt. Die Mischung wird mit Butanon (40 mL) und 1,5-Cyclooctadien-platin(II)dichlorid (0.60 g, 1.6 mmol, 1 eq) versetzt und 16 h unter Rückfluß gerührt. Nach Abkühlung auf Raumtemperatur wird die Mischung zur Trockne eingeengt. Der Rückstand wird in Dimethylformamid (80 mL) aufgenommen und mit 2,4-Pentandion (0.65 g, 6.4 mmol, 4 eq) und Kalium-*tert*-butylat (0.73 g, 6.4 mmol, 4 eq) versetzt. Die Mischung wird 16 h bei Raumtemperatur und 6 h bei 100 °C gerührt. Nach Abkühlung auf Raumtemperatur wird zur Trockne eingeegt und der Rückstand mit Wasser gewaschen.
Ausbeute: 0.53 g (1.1 mmol, 70%).
¹H-NMR (*d₆*-DMSO), 400 MHz): δ = 1.97 (s, 3H), 2.04 (s, 3H), 4.01 (s, 3H), 5.64 (s, 1H), 7.45 (d, *J* 2.0, 1 H), 7.48 (s, 1 H), 7.51 (d, J 1.5, 1 H), 7.78 (d, J 1.5, 1 H), 8.06 (d, J 2.0, 1H), CI-MS (MeCN/H₂O 8:2): *m*/*z* = 476 (M+H⁺, korrektes Isotopenmuster).

## Patentansprüche

1. Verfahren zur Herstellung von cyclometallierten Carbenkomplexen der allgemeinen Formel (**I**) enthaltend mindestens einen Carbenliganden 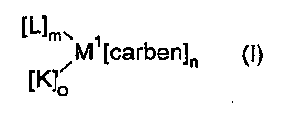 worin die Symbole die folgenden Bedeutungen aufweisen:
M¹ Metallatom ausgewählt aus der Gruppe bestehend aus Ir und Pt, in jeder für das entsprechende Metallatom möglichen Oxidationsstufe;
L mono- oder dianionischer Ligand, der mono- oder bidentat sein kann, ausgewählt aus Cyclopentadienyl, Hydrid, Alkylresten, die mit dem Übergangsmetall M¹ über eine Sigmabindung verknüpft sind, Alkylarylresten, die mit dem Übergangsmetall M¹ über eine Sigmabindung verknüpft sind, Acetylacetonat und dessen Derivaten, Picolinat, Schiffschen Basen, Aminosäuren, Arylazolen, Dialkoholaten, Dicarbonaten, Dicarboxylaten, Diamiden, Diamiden, Dithiolaten, Biscyclopentadienylen, Bisphosphonaten, Bissulfonaten und 3-Phenylpyrazol,
K neutraler mono- oder bidentater Ligand;
n Zahl der Carbenliganden, wobei n mindestens 1, bevorzugt mindestens 2, ist und die Carbenliganden in dem Komplex der Formel I bei n >1 gleich oder verschieden sein können;
m Zahl der Liganden L, wobei m 0 oder ≥ 1 sein kann und die Liganden L bei m > 1 gleich oder verschieden sein können;
o Zahl der Liganden K, wobei o 0 ist;
wobei die Summe n + m von der Oxidationsstufe und Koordinationszahl des eingesetzten Metallatoms und von der Zähnigkeit der Liganden carben und L sowie von der Ladung der Liganden carben und L abhängig ist, mit der Bedingung, dass n mindestens 1 ist; carben Carbenligand ausgewählt ist aus der Gruppe bestehend aus 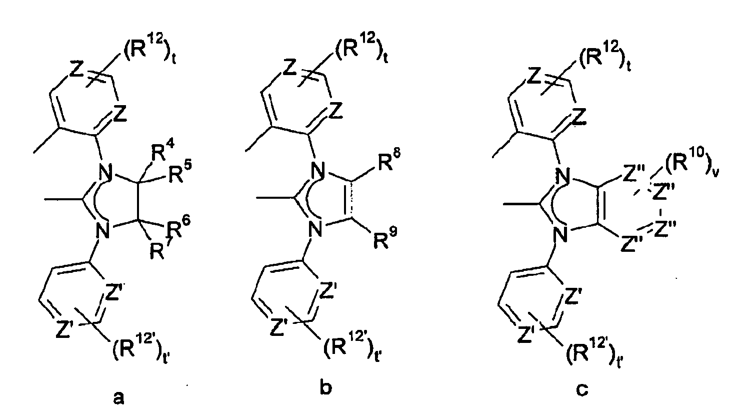 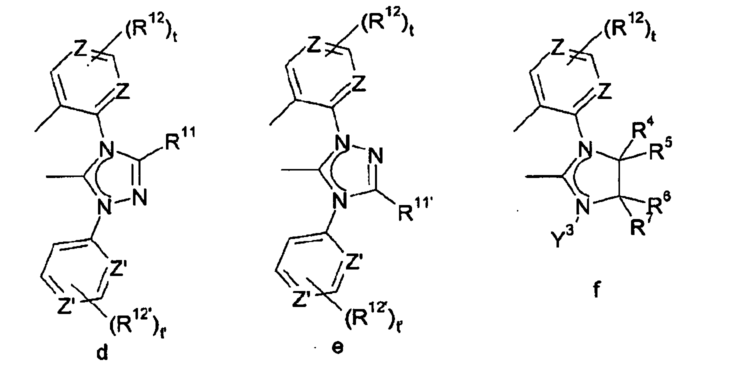 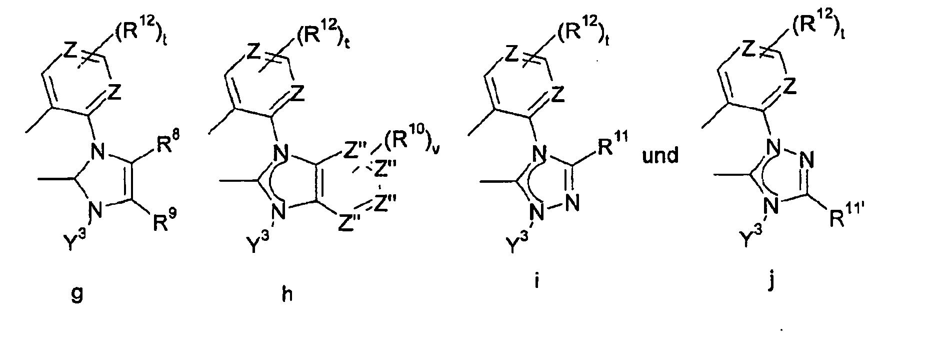 worin die Symbole die folgenden Bedeutungen aufweisen:
Z, Z', Z" gleich oder verschieden CH oder N
R¹², R^{12'} gleich oder verschieden ein Alkyl-, Aryl-, Heteroaryl-, Alkinyl- oder Alkenylrest, oder jeweils 2 Reste R¹² bzw. R^{12'} bilden gemeinsam einen anellierten Ring, der gegebenenfalls mindestens ein Heteroatom enthalten kann, oder R¹² bzw. R^{12'} bedeutet einen Rest mit Donor- oder Akzeptorwirkung;
t und t' gleich oder verschieden 0 bis 4, wobei, wenn t bzw. t' > 1 ist, die Reste R¹² bzw. R^{12'} gleich oder verschieden sein können;
R⁴, R⁶, R⁶, R⁷, R⁸, R⁹ und R¹¹ Wasserstoff, Alkyl, Aryl, Heteroaryl, Alkinyl oder Alkenyl oder ein Rest mit Donor- oder Akzeptorwirkung;
R¹⁰ Alkyl, Aryl, Heteroaryl, Alkinyl oder Alkenyl oder jeweils 2 Reste R¹⁰ bilden gemeinsam einen anellierten Ring, der gegebenenfalls mindestens ein Heteroatom enthalten kann, oder R¹⁰ bedeutet einen Rest mit Donor-oder Akzeptorwirkung;
weiterhln kann die Gruppe der Struktur 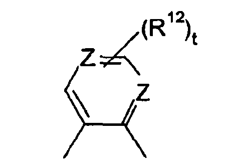 über den aromatischen Grundkörper oder über einen der Reste R¹² mit R⁴ oder R⁵ oder dem Kohlenstoffatom, mit dem R⁴ und R⁵ verknüpft sind, in den Gruppierungen a und f, R⁸ oder dem Kohlenstoffatom, mit dem R⁸ verknüpft ist, in den Gruppierungen b und g, einen der Reste R¹⁰ oder einem der Kohlenstoffatome, mit dem R¹⁰ verknüpft ist, in der Gruppierungen c und h und R¹¹ oder dem Kohlenstoffatom, mit dem R¹¹ verknüpft ist, in den Gruppierungen d und i über eine Brücke verknüpft sein, wobei die Brücke die folgenden Bedeutungen aufweisen kann:
Alkylen, Arylen, Heteroarylen, Alkinylen, Alkenylen, NR¹⁸, PR¹⁹, BR²⁰, O, S, SO, SO₂, SiR³⁰R³¹, CO, CO-O, O-CO und (CR²¹R²²)ₓ, wobei eine oder mehrere nicht benachbarte Gruppen (CR²¹R²²) durch NR¹⁸, PR¹⁹, BR²⁰, O, S, SO, SO₂, SiR³⁰R³¹, CO, CO-O, O-CO ersetzt sein können, wobei
x 2 bis 10; und
R¹⁸, R¹⁹, R²⁰, R²¹, R²², R³⁰, R³¹ H, Alkyl, Aryl, Heteroaryl, Alkenyl, Alkinyl
bedeuten;
wobei in den Fällen, worin die Gruppe der Struktur 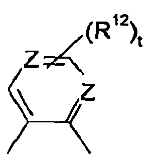 über eine Brücke mit dem Kohlenstoffatom, mit dem R⁴ und R⁵ verknüpft sind (Gruppierungen a und f), dem Kohlenstoffatom, mit dem R⁸ verknüpft ist (Gruppierungen b und g), einem der Kohlenstoffatome, mit dem R¹⁰ verknüpft ist (Gruppierungen c und h) oder dem Kohlenstoffatom, mit dem R¹¹ verknüpft ist (Gruppierungen d und i), verknüpft ist, der jeweilige Rest R⁴ oder R⁵, R⁸, einer der Reste R¹⁰ oder R¹¹ durch eine Bindung zu der Brücke ersetzt ist;
v 0 bis 4, wobei, wenn v 0 ist, die vier Kohlenstoffatome des Arylrests in Formel c und h, die gegebenenfalls mit R¹⁰ substituiert sind, Wasserstoffatome tragen;
Y³ Wasserstoff, ein Alkyl-, Aryl-, Heteroaryl-, Alkinyl- oder Alkenylrest.
umfassend die Umsetzung eines Ligandvorläufers ausgewählt aus der Gruppe bestehend aus 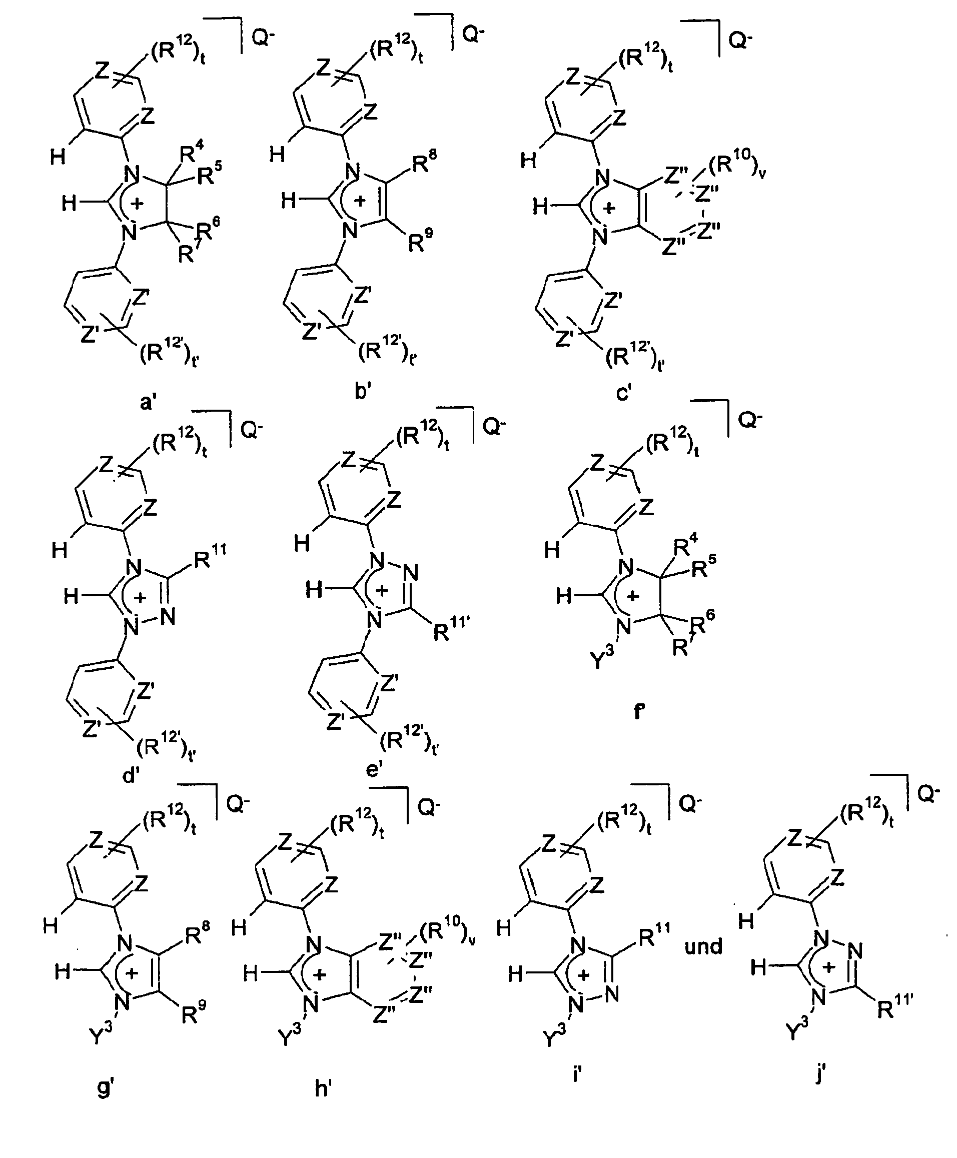 worin
Q⁻ ein monoanionisches Gegenion, bevorzugt Halogenid, Pseudohalogenid, BF₄, BPh₄⁻, PF₆⁻, ASF₆⁻ oder SbF₆⁻;
bedeutet, und
die weiteren Symbole in den Ligandvorläufern der Formeln a' bis j' die bezüglich den Liganden der Formeln a bis j genannten Bedeutungen aufweisen,
wobei
die Umsetzung den Einsatz eines basischen Hilfsreagenzes enthaltend Ag (Weg B) umfasst, wobei der Ligandvorläufer
in Schritt
(iB) mit dem basischen Hilfsreagenz enthaltend Ag umgesetzt wird, wobei ein geschütztes Carben erhalten wird, und
(iiB) anschließend das geschützte Carben ohne weitere Aufarbeitung und/oder Reinigung mit einem Metallkomplex enthaltend mindestens ein Metall M¹ umgesetzt wird;
wobei ein cyclometallierter Carbenkomplex der Formel I erhalten wird,
wobei die Umsetzung In Schritt (iB) bei Raumtemperatur in einem aprotischen Lösungsmittel oder Lösungsmittelgemisch erfolgt und die Umsetzung in Schritt (iiB) bei Temperaturen von 70 bis 150 °C erfolgt.

2. Verfahren nach Anspruch 1, **dadurch gekennzeichnet, dass** (B) das Verhältnis von Metallkomplex enthaltend mindestens ein Metall M¹, Ligandvorläufer der und basischem Hilfsreagenz 1 : 1-10 : 0,5-5 pro Metallatom M¹ und Zahl der Carbenliganden n, bevorzugt 1 : 1-5 : 0,5-2,5, besonders bevorzugt 1 : 1-3 : 0,5-1,5 beträgt (Weg B).

3. Verfahren nach Anspruch 1 oder 2, **dadurch gekennzeichnet, dass** das aprotische Lösungsmittel ausgewählt ist aus mindestens einem Lösungsmittel ausgewählt aus der Gruppe bestehend aus Dioxan, Butanon, THF, Toluol, Xylol, DMF, Acetonitril, DMSO, NMP und Pyridin.

4. Verfahren nach einem der Ansprüche 1 bis 3, **dadurch gekennzeichnet, dass** als Metall M¹ Ir, bevorzugt Ir(I) oder Ir(III), besonders bevorzugt Ir(I), eingesetzt wird.

5. Verfahren nach einem der Ansprüche 1 bis 4, **dadurch gekennzeichnet, dass** in Weg B als basisches Hilfsreagenz Ag₂O, Ag₂CO₃, AgOAc und/oder Ag₂S, bevorzugt Ag₂O, eingesetzt wird.

## Claims

1. A process for preparing cyclometallated carbene complexes of the general
formula (I) comprising at least one carbene ligand 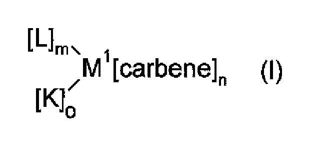 where the symbols have the following meanings:
M¹ is a metal atom selected from the group consisting of Ir and Pt, in any oxidation state possible for the respective metal atom;
L is a monoanionic or dianionic ligand which may be monodentate or bidentate, and is selected from among cyclopentadienyl, hydride, alkyl radicals bound to the transition metal M¹ via a sigma bond, alkylaryl radicals bound to the transition metal M¹ via a sigma bond, acetylacetonate and derivatives thereof, picolinate, Schiff bases, amino acids, arylazoles, dialkoxides, dicarbonates, dicarboxylates, diamides, diimides, dithiolates, biscyclopentadienylene, bisphosphonates, bissulfonates and 3-phenylpyrazole;
K is an uncharged monodentate or bidentate ligand;
n is the number of carbene ligands, with n being at least 1, preferably at least 2, and the carbene ligands in the complex of the formula I being able to be identical or different in the case of n >1;
m is the number of ligands L, with m being able to be 0 or ≥ 1 and the ligands L being able to be identical or different in the case of m > 1;
o is the number of ligands K, with o being 0;
where the sum n + m is dependent on the oxidation state and coordination number of the metal atom used and on the denticity of the ligands carbene and L and also on the charge on the ligands carbene and L, with the proviso that n is at least 1;
carbene is a carbene ligand selected from the group consisting of 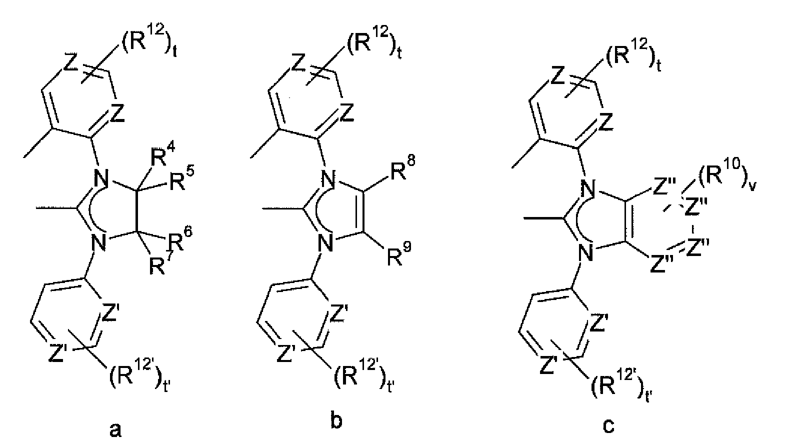 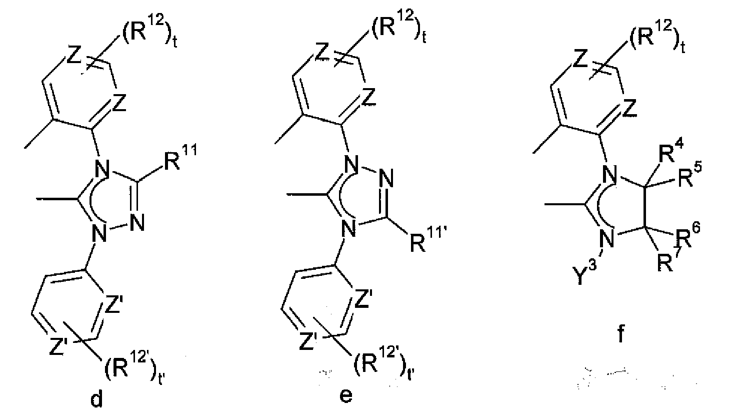 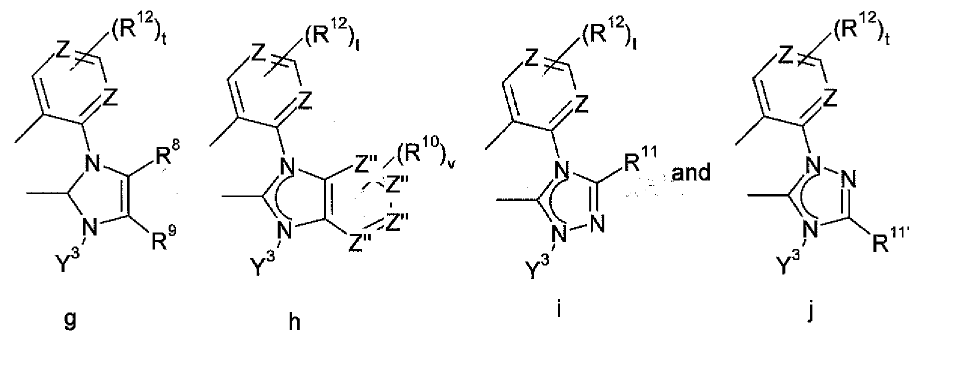 where the symbols have the following meanings:
Z, Z', Z" are identical or different and are each CH or N;
R¹², R^{12'} are identical or different and are each an alkyl, aryl, heteroaryl, alkynyl or alkenyl radical, or 2 radicals R¹² or R^{12'} together form a fused-on ring which may optionally comprise at least one heteroatom, or R¹² or R^{12'} is a radical having a donor or acceptor action;
t and t' are identical or different and are each from 0 to 4, where, when t or t' is > 1, the radicals R¹² or R^{12'} can be identical or different;
R⁴, R⁵, R⁶, R⁷, R⁸, R⁹, and R¹¹ are each hydrogen, alkyl, aryl, heteroaryl, alkynyl or alkenyl or a radical having a donor or acceptor action;
R¹⁰ is alkyl, aryl, heteroaryl, alkynyl or alkenyl, or 2 radicals R¹⁰ together form a fused-on ring which may optionally comprise at least one heteroatom, or R¹⁰ is a radical having a donor or acceptor action;
with the group of the structure 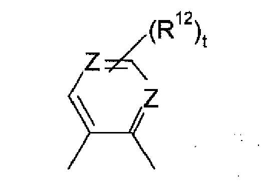 also being able to be joined via the aromatic basic skeleton or via one of the radicals R¹² to R⁴ or R⁵ or the carbon atom to which R⁴ and R⁵ are bound in the groups a and f, R⁸ or the carbon atom to which R⁸ is bound in the groups b and g, one of the radicals R¹⁰ or one of the carbon atoms to which R¹⁰ is bound in the groups c and h and R¹¹ or the carbon atom to which R¹¹ is bound in the groups d and i via a bridge which can have the following meanings:
alkylene, arylene, heteroarylene, alkynylene, alkenylene, NR¹⁸, PR¹⁹, BR²⁰, O, S, SO, SO₂, SiR³⁰R³¹, CO, CO-O, O-CO and (CR²¹R²²)ₓ, where one or more nonadjacent (CR²¹R²²) groups may be replaced by NR¹⁸, PR¹⁹, BR²⁰, O, S, SO, SO₂, SiR³⁰R³¹, CO, CO-O, O-CO, where
x is from 2 to 10; and
R¹⁸, R¹⁹, R²⁰, R²¹, R²², R³⁰, R³¹ are each H, alkyl, aryl, heteroaryl, alkenyl, alkynyl;
where in the cases in which the group of the structure 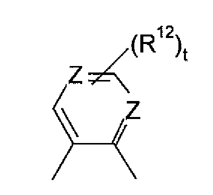 is linked via a bridge to the carbon atom to which R⁴ and R⁵ are bound (groups a and f), the carbon atom to which R⁸ is bound (groups b and g), one of the carbon atoms to which R¹⁰ is bound (groups c and h) or the carbon atom to which R¹¹ is bound (groups d and i), and the respective radical R⁴ or R⁵, R⁸, one of the radicals R¹⁰ and R¹¹ is replaced by a bond to the bridge;
v is from 0 to 4, where, when v is 0, the four carbon atoms of the aryl radical in formulae c and h which may optionally be substituted by R¹⁰ bear hydrogen atoms;
Y³ is hydrogen, an alkyl, aryl, heteroaryl, alkynyl or alkenyl radical;
which comprises reaction of a ligand precursor selected from the group consisting of 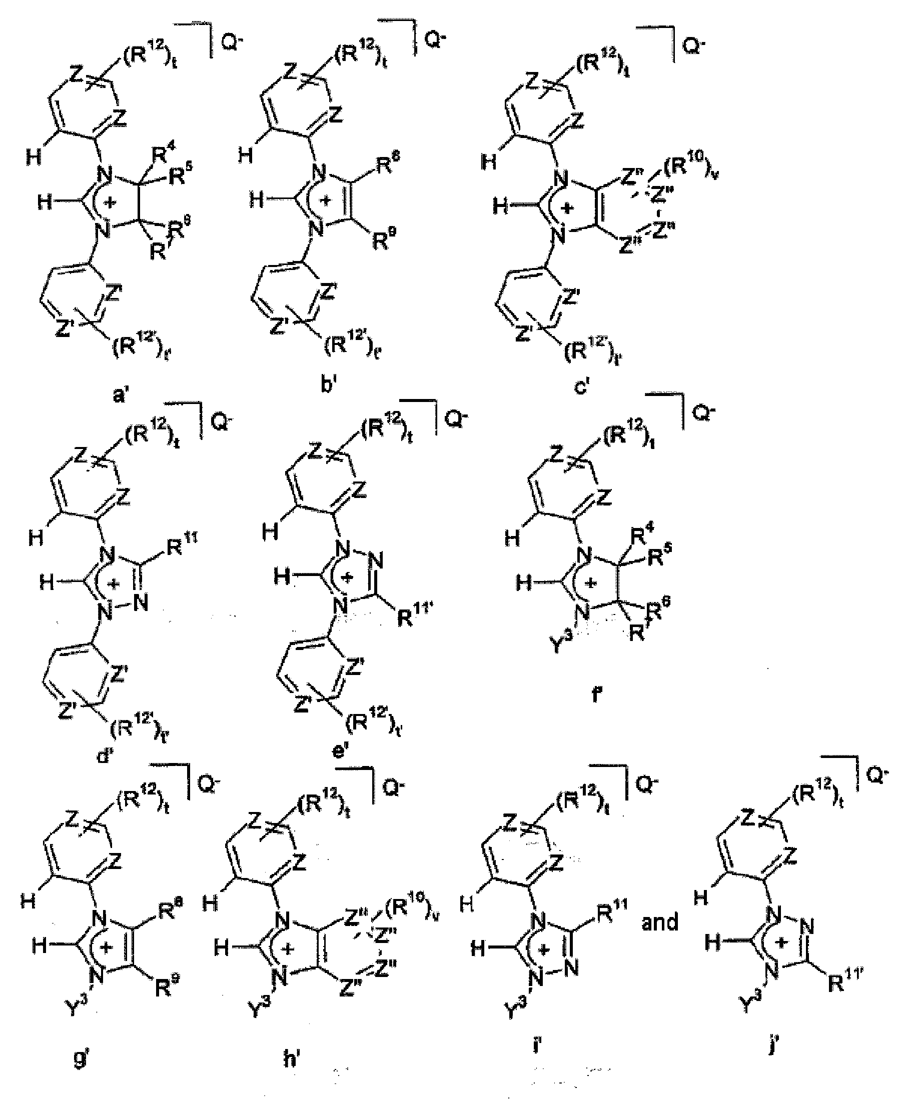 where
Q- is a monoanionic counterion, preferably halide, pseudohalide, BF₄⁻, BPh₄⁻, PF₆⁻, AsF₆⁻ or SbF₆⁻;
and
the further symbols in the ligand precursors of the formulae a' to j' have the meanings given in respect of the ligands of the formulae a to j,
where
the reaction comprises the use of a basic auxiliary reagent comprising Ag (route B) where the ligand precursor is
in step
(iB) reacted with the basic auxiliary reagent comprising Ag to give a protected carbene and
(iiB) the protected carbene is subsequently reacted without further work-up and/or purification with a metal complex comprising at least one metal M¹
to give a cyclometallated carbene complex of the formula I,
where the reaction in step (iB) is carried out at room temperature in an aprotic solvent or solvent mixture and the reaction in step (iiB) is carried out at temperatures of from 70 to 150°C.

2. The process according to claim 1, wherein
(B) the ratio of metal complex comprising at least one metal M¹, ligand precursor and basic auxiliary reagent is 1 : 1-10 : 0.5-5 per metal atom M¹ and number of carbene ligands n, preferably 1 : 1-5 : 0.5-2.5, particularly preferably 1 : 1-3 : 0.5-1.5 (route B).

3. The process according to claim 1 or 2, wherein the aprotic solvent is selected from at least one solvent selected from the group consisting of dioxane, butanone, THF, toluene, xylene, DMF, acetonitrile, DMSO, NMP and pyridine.

4. The process according to any of claims 1 to 3, wherein Ir, preferably Ir(I) or Ir(III), particularly preferably Ir(I), is used as metal M¹.

5. The process according to any of claims 1 to 4, wherein Ag₂O, Ag₂CO₃, AgOAc and/or Ag₂S, preferably Ag₂O, is used as basic auxiliary reagent in route B.

## Revendications

1. Procédé pour la préparation de complexes de carbène cyclométallisés de formule générale (I) contenant au moins un ligand carbène 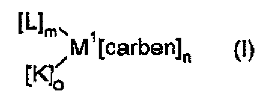 où les symboles présentent les significations suivantes :
M¹ atome métallique choisi dans le groupe constitué par Ir et Pt, dans chaque étage d'oxydation possible pour l'atome de métal correspondant ;
L ligand monoanionique ou dianionique, qui peut être monodentate ou bidentate, choisi parmi cyclopentadiényle, hydrure, radicaux alkyle, qui sont liés au métal de transition M¹ via une liaison sigma, radicaux alkylaryle, qui sont liés au métal de transition M¹ via une liaison sigma, acétylacétonate et ses dérivés, picolinate, bases de Schiff, aminoacides, arylazoles, dialcoolates, dicarbonates, dicarboxylates, diamides, diimides, dithiolates, biscyclopentadiényles, bisphosphonates, bissulfonates et 3-phénylpyrazole,
K ligand monodentate ou bidentate neutre ;
n nombre de ligands carbène, n valant au moins 1, de préférence au moins 2, et les ligands carbène dans le complexe de formule I pour n > 1 pouvant être identiques ou différents ;
m nombre de ligands L, m pouvant valoir 0 ou être ≥ 1 et les ligands L pour m > 1 pouvant être identiques ou différents ;
o nombre de ligands K, o valant 0 ;
la somme n + m dépendant de l'étage d'oxydation et de l'indice de coordination de l'atome de métal utilisé et de la valence des ligands carbène et L ainsi que de la charge des ligands carbène et de L, à condition que n vaille au moins 1 ;
carben ligand carbène choisi dans le groupe constitué par : 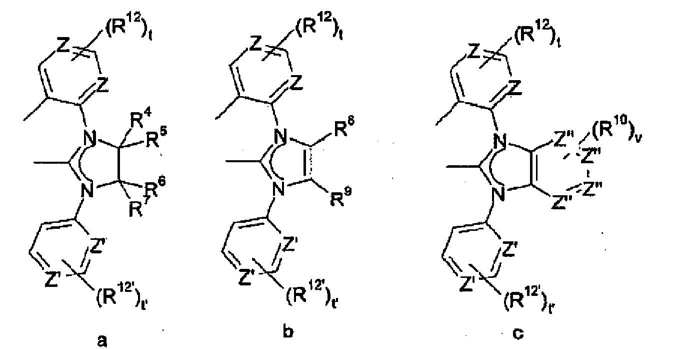 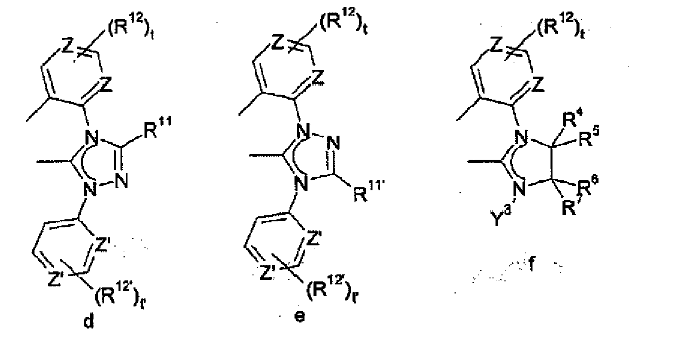 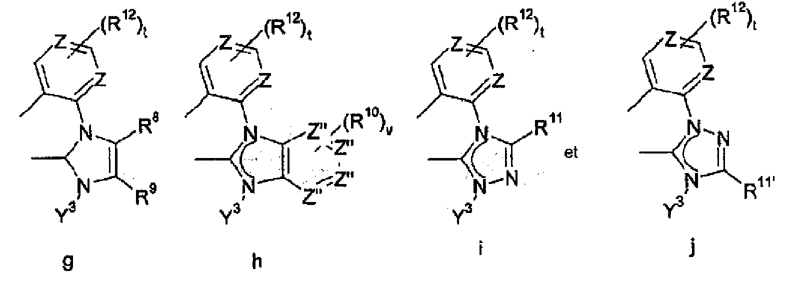 où les symboles présentent les significations suivantes :
Z, Z', Z'' identiques ou différents, CH ou N
R¹², R^{12'} identiques ou différents, radical alkyle, aryle, hétéroaryle, alcynyle ou alcényle ou à chaque fois 2 radicaux R¹² ou, selon le cas, R^{12'} forment ensemble un cycle condensé, qui peut le cas échéant contenir au moins un hétéroatome, ou R¹² ou, selon le cas, R^{12'} signifie un radical doté d'un effet donneur ou accepteur ;
t et t' identiques ou différents, 0 à 4, où, lorsque t ou, selon le cas, t' > 1, les radicaux R¹² ou, selon le cas, R^{12'} peuvent être identiques ou différents ;
R⁴, R⁵, R⁶, R⁷, R⁸, R⁹ et R¹¹ hydrogène, alkyle, aryle, hétéroaryle, alcynyle ou alcényle ou un radical doté d'un effet donneur ou accepteur ;
R¹⁰ alkyle, aryle, hétéroaryle, alcynyle ou alcényle ou à chaque fois 2 radicaux R¹⁰ forment ensemble un cycle condensé, qui peut le cas échéant contenir au moins un hétéroatome, ou R¹⁰ signifie un radical doté d'un effet donneur ou accepteur ;
en outre, le groupe de structure 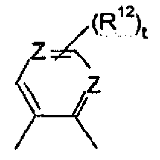 peut être lié via le corps de base aromatique ou via un des radicaux R¹² à R⁴ ou à R⁵ ou à l'atome de carbone auquel sont liés R⁴ et R⁵ dans les groupements a et f, à R⁸ ou à l'atome de carbone auquel est lié R⁸ dans les groupements b et g, à un des radicaux R¹⁰ ou à un des atomes de carbone auxquels R¹⁰ est lié dans les groupements c et h et à R¹¹ ou à l'atome de carbone auquel R¹¹ est lié dans les groupements d et i, via un pont, le pont pouvant présentant les significations suivantes :
alkylène, arylène, hétéroarylène, alcynylène, alcénylène, NR¹⁸, PR¹⁹, BR²⁰, O, S, SO, SO₂, SiR³⁰R³¹, CO, CO-O, O-CO et (CR²¹R²²)ₓ, un ou plusieurs groupes (CR²¹R²²) non adjacents pouvant être remplacés par NR¹⁸, PR¹⁹, BR²⁰, O, S, SO, SO₂, SiR³⁰R³¹, CO, CO-O, O-CO, où
x vaut 2 à 10 ; et
R¹⁸, R¹⁹, R²⁰, R²¹, R²², R³⁰, R³¹ signifient H, alkyle, aryle, hétéroaryle, alcényle, alcynyle
où, dans les cas dans lesquels le groupe de structure 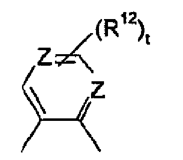 est lié via un pont à l'atome de carbone auquel R⁴ et R⁵ sont liés (groupements a et f), à l'atome de carbone auquel R⁸ est lié (groupements b et g), à un des atomes de carbone auxquels R¹⁰ est lié (groupements c et h) ou à l'atome de carbone auquel R¹¹ est lié (groupements d et i), chaque radical R⁴ ou R⁵, R⁸, un des radicaux R¹⁰ ou R¹¹ est remplacé par une liaison au pont ;
v 0 à 4, où, lorsque v vaut 0, les quatre atomes de carbone du radical aryle dans la formule c et h, qui sont le cas échéant substitués par R¹⁰, portent des atomes d'hydrogène ;
Y³ hydrogène, un radical alkyle, aryle, hétéroaryle, alcynyle ou alcényle
comprenant la transformation d'un précurseur de ligand, choisi dans le groupe constitué par : 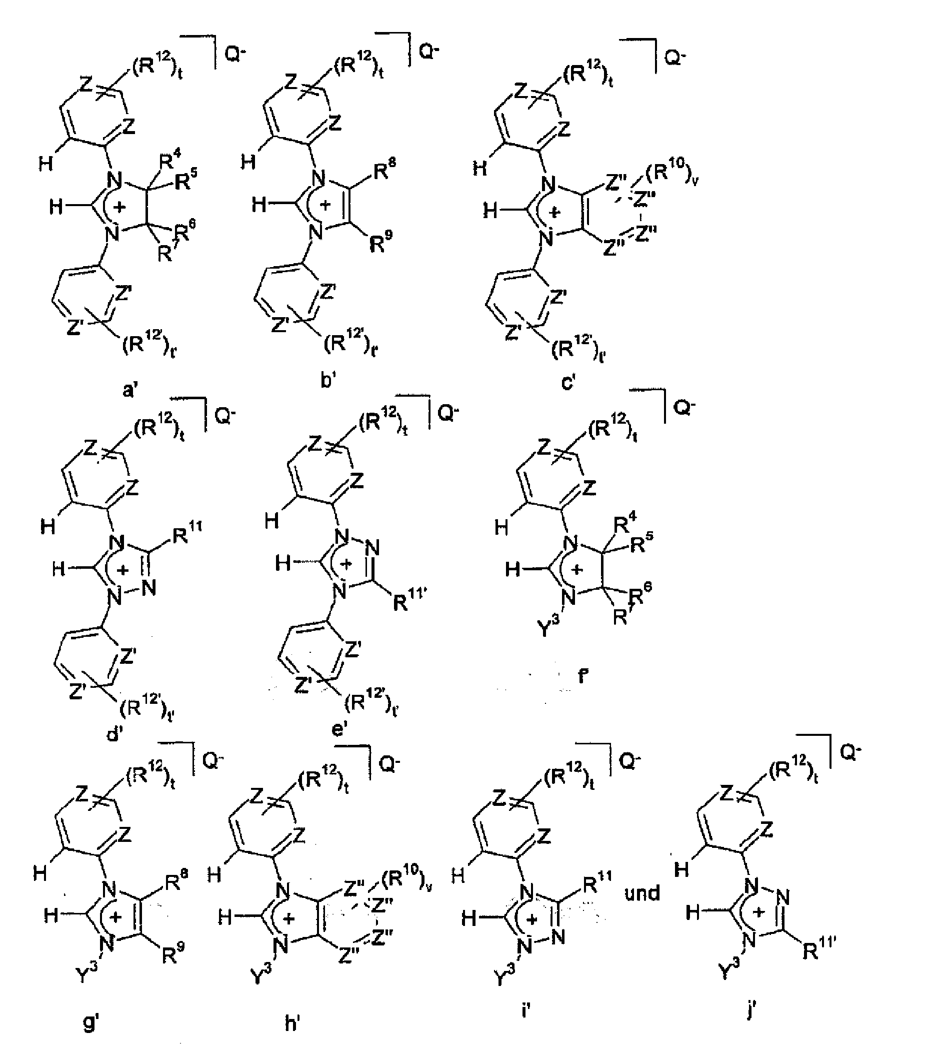 où
Q⁻ signifie un contre-ion monoanionique, de préférence halogénure, pseudohalogénure, BF₄⁻, BPh₄⁻, PF₆⁻, ASF₆⁻ ou SbF₆⁻ ; et
les autres symboles dans les précurseurs de ligands des formules a' à j' présentent les significations mentionnées en ce qui concerne les ligands des formules a à j,
la transformation comprenant l'utilisation d'un réactif auxiliaire basique contenant Ag (voie B), le précurseur de ligand, dans l'étape
(iB) étant transformé avec le réactif auxiliaire basique contenant Ag, un carbène protégé étant obtenu, et
(iiB) le carbène protégé étant ensuite transformé sans autre traitement et/ou purification avec un complexe métallique contenant au moins un métal M¹ ;
un complexe de carbène cyclométallisé de formule générale I étant obtenu,
la transformation dans l'étape (iB) ayant lieu à température ambiante dans un solvant ou un mélange de solvants aprotiques et la transformation dans l'étape (iiB) ayant lieu à des températures de 70 à 150°C.

2. Procédé selon la revendication 1, **caractérisé en ce que**
(B) le rapport du complexe métallique contenant au moins un métal M¹, du précurseur de ligand et du réactif auxiliaire basique valant 1:1-10:0,5-5 par atome métallique M¹ et le nombre de ligands carbène n, de préférence 1:1-5:0,5-2,5, de manière particulièrement préférée 1:1-3:0,5-1,5 (voie B).

3. Procédé selon la revendication 1 ou 2, **caractérisé en ce que** le solvant aprotique est choisi parmi au moins un solvant choisi dans le groupe constitué par le dioxane, la butanone, le THF, le toluène, le xylène, le DMF, l'acétonitrile, le DMSO, la NMP et la pyridine.

4. Procédé selon l'une quelconque des revendications 1 à 3, **caractérisé en ce qu'**on utilise, comme métal M¹, Ir, de préférence Ir(I) ou Ir(III), de manière particulièrement préférée Ir(I).

5. Procédé selon l'une quelconque des revendications 1 à 4, **caractérisé en ce qu'**on utilise, dans la voie B, comme réactif auxiliaire basique, Ag₂O, Ag₂CO₃, AgOAc et/ou Ag₂S, de préférence Ag₂O.
